(19) Europäisches Patentamt
European Patent Office
Office européen des brevets

(11) **EP 1 049 538 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(21) Anmeldenummer: **99903633.8**

(22) Anmeldetag: **14.01.1999**

(51) Int Cl.⁷: **B01L 3/02**, G01N 35/10
// (B05B9/04, F04B19:00)

(86) Internationale Anmeldenummer:
**PCT/EP99/00185**

(87) Internationale Veröffentlichungsnummer:
**WO 99/37400 (29.07.1999 Gazette 1999/30)**

(54) **MIKRODOSIERVORRICHTUNG**

MICRODOSING DEVICE

DISPOSITIF DE MICRODOSAGE

(84) Benannte Vertragsstaaten:
**AT CH DE FI FR GB IT LI SE**

(30) Priorität: **22.01.1998 DE 19802368**

(43) Veröffentlichungstag der Anmeldung:
**08.11.2000 Patentblatt 2000/45**

(73) Patentinhaber:
**HAHN-SCHICKARD-GESELLSCHAFT FÜR ANGEWANDTE FORSCHUNG E.V.
D-78052 Villingen-Schwenningen (DE)**

(72) Erfinder:
• **Zengerle, Roland
D-78050 Villingen-Schwenningen (DE)**

• **FREYGANG, Michael
D-78050 VS-Villingen (DE)**
• **HEY, Nicolaus
D-78664 Eschbronn (DE)**
• **GRUHLER, Holger
D-78609 Tuningen (DE)**

(74) Vertreter: **Schoppe, Fritz, Dipl.-Ing. et al
Schoppe, Zimmermann & Stöckeler
Patentanwälte
Postfach 71 08 67
81458 München (DE)**

(56) Entgegenhaltungen:
**EP-A- 0 703 364          EP-A- 0 725 267
WO-A-97/10435          DE-A- 19 706 513
US-A- 5 593 290**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung bezieht sich auf eine Mikrodosiervorrichtung.

Die präzise Dosierung kleinster Flüssigkeitsvolumina im Bereich zwischen 0,01 µl und 1 µl ist beispielsweise auf den Gebieten der Biotechnologie, der DNA-Analytik sowie der kombinatorischen Chemie von großer und entscheidender Bedeutung. Gemäß dem Stand der Technik werden zur Dosierung kleiner Volumina überwiegend Dispenser oder Pipetten verwendet. Dabei wird das zu dosierende Volumen entweder direkt, durch eine sogenannte Kolbendirektverdrängung, oder über ein zwischengeschaltetes Luftpolster verdrängt. Diesbezüglich sei. beispielsweise auf den Artikel "Pipettieren und Dispensieren", A. Jahns, Fachzeitschrift der Technischen Assistenten in der Medizin, Jahrgang 8 (1993), Heft 12, Seiten 1166 - 1172, Umschau Zeitschriftenverlag, verwiesen.

Luftpolsterpipetten eignen sich für die Dosierung von Volumina zwischen 0,1 µl und 5 ml, wobei bei Volumina größer als 1 µl Genauigkeiten von ±2-3% erreicht werden. Bei kleineren Volumina werden jedoch aufgrund von Oberflächeneffekten an der Pipettenspitze nur Genauigkeiten von ca. ±10% erreicht. Die Beschränkung bei der Dosiergenauigkeit bei kleinen Volumina beruht hauptsächlich darauf, daß die Pipetten- bzw. Dispenser-Spitze in das zu dosierende Medium eingetaucht werden muß, wobei Effekte wie Oberflächenspannung, Benetzung und hydrostatischer Druck die Dosiermenge beeinflussen. Um diese Probleme sowie die Gefahr der Medienverschleppung durch das Eintauchen zu umgehen, sollte ein Dosiersystem auf der Abgabe des Dosiervolumens im freien Strahl beruhen. Direktverdränger-Dispensiervorrichtungen bieten diesen zusätzlichen Vorteil, allerdings nur bei Volumina von ca. 10 µl und darüber.

Bekannte Systeme, die geringste Flüssigkeitsvolumen im Freistrahl abgeben, sind Tintenstrahl-Druckköpfe. Es sind Tintenstrahl-Druckköpfe bekannt, die auf zwei grundsätzlich unterschiedlichen Prinzipien basieren, solche, die unter Verwendung thermischer Wandler wirksam sind, und solche, die unter Verwendung piezoelektrischer Wandler wirksam sind. Diesbezüglich sei auf die Druckschriften N. Schwesinger: "Planarer Tintenstrahldruckkopf". F&M, 11-12; S. 456-460; 1993; H. Bentin, M. Doering, W. Radtke, U. Rothgordt: "Physical Properties of Micro-Planar Ink-Drop Generators". J. Imaging Technology, 3; S. 152-155; 1986; und Wolfgang Wehl; Tintendrucktechnologie: Paradigma und Motor der Mikrosystemtechnik; Feinwerktechnik & Meßtechnik; Teil 1 in Ausgabe 6/95; Teil 2 in Ausgabe 9/95, verwiesen.

Bei Druckköpfen nach dem "Drop-on-Demand"-Verfahren wird nach Anlegen eines Spannungspulses jeweils ein kleiner Tintentropfen im Freistrahl auf ein Papier geschleudert. Ein typischer Tropfendurchmesser liegt bei etwa 60 µm, das Volumen beträgt also etwa 0,0001 µl. Diese Druckköpfe sind in der Regel jedoch nur für die Verwendung von speziellen Tinten ausgelegt. Medien, die beispielsweise in der Biotechnologie eingesetzt werden, unterscheiden sich in Viskosität und Oberflächenspannung von den Tinten meist sehr stark. Die Viskosität und die Oberflächenspannung beeinflussen jedoch die Tropfengröße und somit das dosierte Volumen beträchtlich. Ferner ist eine Tropfengenerierung überhaupt nur in einem sehr engen Viskositätsbereich möglich. Eine Modifizierung des Volumens der Einzeltropfen kann überdies durch eine Modifikation der Ansteuerpulse nur in einem sehr eingeschränkten Bereich erfolgen.

Es sind ferner Dosiersysteme bekannt, die auch in der Lage sind, bei Medien stark unterschiedlicher Viskosität Tropfen zu generieren. Ein solches System ist beispielsweise in der Schrift "Mikrodosierung", Firmenschrift der Fa. microdrop GmbH, Norderstedt, 1995, beschrieben. Wie bei Tintenstrahldruckköpfen wird das Tropfenvolumen dabei hauptsächlich von der Größe des Düsendurchmessers bestimmt. Nur in stark eingeschränktem Maße kann es auch durch die elektrische Ansteuerung des Aktors beeinflußt werden. Der Vorgang des Tropfenabrisses an der Düse hängt jedoch wie bei den Tintendruckköpfen von den physikalischen Eigenschaften, d.h. der Viskosität, der Oberflächenspannung, usw., der zu dosierenden Medien ab. Wiederum ist somit die exakte Größe der Tropfen stark medienabhängig. Die Dosierung eines gewünschten Volumens, das meist in einem Bereich von 0,1 µl - 1 µl liegt, beruht auf dem Abzählen von Einzeltropfen gleicher Größe. Das typische Volumen eines Einzeltropfens ist kleiner 0,001 µl. Da sich die Volumenfehler der Einzeltropfen bei diesem Verfahren jedoch aufsummieren, ist die Dosierpräzision stark eingeschränkt.

Um eine Erhöhung dieser Dosierpräzision zu ermöglichen, sind aufwendige Systeme notwendig. Beispielsweise kann ein Bildverarbeitungssystem verwendet werden, mit dem sich während eines Dosiervorgangs die Größe der Einzeltropfen bestimmen und die benötigte Tropfenanzahl berechnen läßt. Ferner kann bei einem alternativen Verfahren zur Steigerung der Dosierpräzision dem zu dosierenden Medium ein fluoreszierender Stoff beigemischt werden. Bei diesem alternativen Verfahren wird der Dosiervorgang beendet, wenn die Intensität des Fluoreszenzsignals den Sollwert erreicht. Es ist jedoch offensichtlich, daß beide genannten Verfahren zur Steigerung der Dosierpräzision jeweils sehr aufwendig und teuer sind.

Aus der EP-A-0439327 ist ein Steuersystem für eine Mikropumpe bekannt, die beispielsweise in einer Dosiervorrichtung verwendbar ist. Das Steuersystem steuert selektiv die Erzeugung von Treiberpulsen, um das Ausgeben von Fluid durch die Pumpe zu steuern. Bei dieser bekannten Steuerung für eine Mikropumpe werden jeweils Rechtecksignale unterschiedlicher Amplitude verwendet, um ein piezoelektrisches Treiberelement, das zum Treiben einer Pumpmembran dient, anzusteuern.

Aus der EP-A-0725267 ist eine elektrisch steuerbare Mikro-Pipette zur Handhabung kleinster Fluidvolumina im Bereich von einigen Hundert pl bis zu einigen μl bekannt. Die Hauptkomponente dieser bekannten Mikro-Pipette ist eine als Mikroejektionspumpe betriebene Mikromembranpumpe, wobei ferner eine zweite Mikromembranpumpe vorgesehen sein kann, die als Mikrodruck- oder Mikrosaug-Pumpe ausgestaltet ist. Diese jeweiligen Pumpen werden jeweils mit Rechteckspannungen angesteuert.

In der älteren, nicht vorveröffentlichten Deutschen Anmeldung 19706513.9-52 der Anmelderin der vorliegenden Anmeldung, eingereicht am 19. Februar 1997, ist eine Mikrodosierungsvorrichtung offenbart, die die Ausgabe exakt definierter Fluidvolumen ermöglicht. In dieser Anmeldung ist eine Mikrodosiervorrichtung offenbart, die eine Druckkammer aufweist, welche zumindest teilweise von einem Verdränger begrenzt ist. Eine Betätigungseinrichtung zum Betätigen des Verdrängers ist vorgesehen, wobei durch die Betätigung des Verdrängers das Volumen der Druckkammer veränderbar ist. Ein Medienreservoir ist über eine erste Fluidleitung fluidmäßig mit der Druckkammer verbunden, während eine Auslaßöffnung über eine zweite Fluidleitung fluidmäßig mit der Druckkammer verbunden ist. Um den Ausstoß eines definierten Fluidvolumens aus der Auslaßöffnung zu bewirken, ist gemäß der oben genannten Schrift eine Einrichtung zum Erfassen der jeweiligen Stellung des Verdrängers sowie eine Steuereinrichtung, die mit der Betätigungseinrichtung und der Einrichtung zum Erfassen der Stellung des Verdrängers verbunden ist, vorgesehen, wobei die Steuereinrichtung die Betätigungseinrichtung auf der Grundlage der erfaßten Stellung des Verdrängers oder auf der Grundlage während zumindest eines vorherigen Dosierzyklusses erfaßter Stellungen des Verdrängers steuert.

Mittels der in der oben genannten Deutschen Anmeldung 19706513.9-52 offenbarten Mikrodosiervorrichtung ist es möglich, exakt definierte Fluidvolumen unabhängig von der Viskosität des zu dosierenden Fluids auszustoßen, indem das Betätigungsglied des Verdrängers basierend auf den Ausgangssignalen des Volumensensors angesteuert wird. Somit ist das definierte Fluidvolumen nahezu unabhängig von der Viskosität, von Oberflächenspannungen, usw. des zu dosierenden Mediums. Folglich kann bei der oben genannten Deutschen Anmeldung eine Dosierung sich in Viskosität und Oberflächenspannungen unterscheidender Medien, wie sie beispielsweise in der Biotechnologie eingesetzt werden, durchgeführt werden.

Ausgehend von dem beschriebenen Stand der Technik besteht die Aufgabe der vorliegenden Erfindung darin, eine wenig aufwendige Mikrodosiervorrichtung zu schaffen, die innerhalb eines Betriebsbereichs eine von der Viskosität eines zu dosierenden Mediums unabhängige Dosierung ermöglicht.

Diese Aufgabe wird durch eine Mikrodosiervorrichtung gemäß Anspruch 1 gelöst.

Die vorliegende Erfindung basiert auf der Erkenntnis, daß es möglich ist, eine in einem ausreichenden interessierenden Betriebsbereich viskositätsunabhängige Dosierung zu schaffen, selbst wenn bei der Mikrodosiervorrichtung, die in der oben genannten Deutschen Anmeldung 19706513.9-52 offenbart ist, auf die Volumensensoreinrichtung, d.h. eine Einrichtung zum Erfassen der Stellung des Verdrängers, verzichtet wird. Diese, für viele Anwendungen ausreichende Viskositätsunabhängigkeit der Dosierung, wie sie in der vorliegenden Anmeldung beschrieben ist, ist in der oben genannten Deutschen Anmeldung 19706513.9-52 nicht offenbart, da dort der Ausstoß eines definierten Fluidvolumens, im wesentlichen viskositätsunabhängig, gerade auf der Grundlage einer solchen Volumensensoreinrichtung durchgeführt wird.

Die vorliegende Erfindung schafft eine volumensensorfreie Mikrodosiervorrichtung mit einer Druckkammer, die zumindest teilweise von einem Verdränger begrenzt ist, einer Betätigungseinrichtung zum Betätigen des Verdrängers, wobei durch die Betätigung des Verdrängers das Volumen der Druckkammer veränderbar ist, einem Medienreservoir, das fluidmäßig mit der Druckkammer verbunden ist, einer Auslaßöffnung, die fluidmäßig mit der Druckkammer verbunden ist, und einer Steuereinrichtung. Mittels der Steuereinrichtung wird die Mikrodosiervorrichtung derart angetrieben, daß durch eine Bewegung des Verdrängers aus einer ersten Stellung in eine vorbestimmte zweite Stellung eine kleine Volumenänderung pro Zeiteinheit bewirkt wird, wobei die zweite Stellung des Verdrängers ein größeres Volumen der Druckkammer definiert als die erste Stellung, zum Ansaugen eines Fluidvolumens in die Druckkammer. Während einer zweiten Phase treibt die Steuereinrichtung die Mikrodosiervorrichtung derart, daß durch eine Bewegung des Verdrängers aus der zweiten Stellung in die erste Stellung eine große Volumenänderung des Druckkammervolumens pro Zeiteinheit bewirkt wird, um dadurch ein definiertes Fluidvolumen aus der Auslaßöffnung auszustoßen.

Gemäß der vorliegenden Erfindung geschieht das Ausschleudern von Flüssigkeit durch eine Direktverdrängung der Flüssigkeit im Gegensatz zu akustischen Prinzipien, wie sie beispielsweise bei den meisten Tintendruckköpfen verwendet werden. Bei derartigen Tintendruckköpfen, insbesondere bei solchen, die piezoelektrisch angetrieben werden, wird in der Dosier-kammer meist eine Druckwelle erzeugt, die sich in Richtung Düse ausbreitet und dort zu einem Tropfenabriß führt. Hierbei entspricht der Tropfendurchmesser im wesentlichen dem doppelten Düsenquerschnitt. Im Gegensatz dazu wird bei bekannten, sogenannten Bubble-Jet-Druckern eine Druckwelle durch eine Dampfblase erzeugt, wobei die Verdrängung, die durch die Dampfblase bewirkt wird, aufgrund der Größe der Dampfblase auf ein Volumen von ca. 50 bis 100 pl beschränkt ist und aufgrund physikalischer Prinzipien nicht wesentlich gesteigert werden kann. Dies führt typischerweise zum Abriß eines Einzeltropfens in der Größenordnung des doppelten Düsenquerschnitts und nicht wie bei der vorliegenden Erfindung zu einem Flüssigkeitsstrahl, dessen Gesamtvolumen wesentlich größer als dieser Einzeltropfen ist.

Der exakte Tropfenabriß und damit das dosierte Flüssigkeitsvolumen hängt bei jedem Mechanismus, mit dem Einzeltropfen generiert werden, von vielen Details ab, wie z. B. der Viskosität, der Oberflächenspannung der Flüssigkeit, der Temperatur, der Ansteuerspannung, usw. Dabei unterscheiden sich bei diesen Einzeltropfen-Mechanismen sowohl die Tropfengröße als auch die Ausbildung eines "Tropfenschweifs", der beim Abriß des Tropfens erzeugt wird. Somit hat auch eine unterschiedliche Viskosität eine Variation des dosierten Volumens eines Einzeltropfens zur Folge, wobei bei der Erzeugung des gesamten zu dosierenden Volumens durch die Aufsummation von Einzeltropfen die absoluten Dosierfehler jedes einzelnen Tropfens summiert werden. Der relative Dosierfehler des Gesamtvolumens entspricht somit dem relativen Dosierfehler jedes Einzeltropfens.

Das Konzept der vorliegenden Erfindung besteht nun darin, eine wesentliche größere Flüssigkeitsmenge als einen einzelnen Tropfen mit hoher kinetischer Energie abzustoßen. Die abgestoßene Flüssigkeitsmenge kann dabei das Volumen von etwa 10 bis 1.000 Einzeltropfen aufweisen, wobei dies jedoch lediglich eine beispielhafte Angabe ist. Somit wirken sich bei der vorliegenden Erfindung beim Abriß des Flüssigkeitsstrahls auftretende Effekte nur auf den Anfang und das Ende des Flüssigkeitsstrahls aus und besitzen bezogen auf das gesamte Dosiervolumen nur eine untergeordnete Bedeutung. Der überwiegende Teil der Fluidmenge, die aus der Auslaßöffnung, oder Düse, austritt, wird durch die Trägheit und die Reibung bestimmt.

Somit tritt bei dem Verfahren gemäß der vorliegenden Erfindung, das auf einer Direktverdrängung der Flüssigkeit basiert, der durch den Tropfenabriß verursachte Fehler bei der gesamten Fluidmenge nur einmal auf. Während also beim Aufaddieren von 10 bis 1.000 einzelnen Tropfen bei Einzeltropfen-Mechanismen die Fehler der einzelnen Tropfen aufzusummieren sind, läßt sich gemäß der vorliegenden Erfindung der Fehler grob gesprochen um die Anzahl der in der dosierten Fluidmenge enthaltenen Einzeltropfen reduzieren. Es sei hierbei angemerkt, daß auch gemäß der vorliegenden Erfindung der Flüssigkeitsstrahl, nachdem er die Düse verlassen hat, in einzelne Tropfen zerfallen kann. Dies hat jedoch keinen Einfluß mehr auf die gesamte Dosiermenge, da die Flüssigkeit die Düse bereits verlassen hat. Überdies kann eine noch exaktere Dosierung erreicht werden, wenn die Betätigungseinrichtung und der Verdränger mit einer solchen Steifigkeit ausgebildet sind, daß der Verdränger im wesentlichen zwangsgesteuert ist.

Das Medienreservoir kann über eine erste Fluidleitung mit der Druckkammer verbunden sein, während die Auslaßöffnung über eine zweite Fluidleitung mit der Druckkammer verbunden sein kann.

Bei einem bevorzugten Ausführungsbeispiel der vorliegenden Erfindung steuert die Steuereinrichtung die Betätigungseinrichtung derart, daß die beschriebenen Volumenänderungen bewirkt werden. Dazu kann die Steuereinrichtung die Betätigungseinrichtung in der ersten Phase mit einem ersten Signal einer geringen Flankensteilheit ansteuern, während dieselbe die Betätigungseinrichtung in der zweiten Phase mit einem zweiten Signal einer hohen Flankensteilheit ansteuert. Somit ist eine Fluidbewegung in der ersten und der zweiten Fluidleitung in der ersten Phase im wesentlichen trägheitsunabhängig, während eine Fluidbewegung in der zweiten Phase im wesentlichen durch die Relation der Trägheit des Fluids in der ersten und der zweiten Fluidleitung bestimmt ist.

Alternativ kann erfindungsgemäß der Verdränger, wenn derselbe als eine Membran ausgebildet ist, durch die Betätigungseinrichtung in die erste Stellung vorspannbar sein, wobei die Membran mit der Betätigungseinrichtung nicht fest verbunden ist, so daß auf eine Betätigung der Betätigungseinrichtung zu Beginn der ersten Phase hin die Bewegung der Membran aus der ersten Stellung in die zweite Stellung lediglich durch die Rückstellkraft der Membran erfolgt. Auch dadurch kann eine geringe Volumenänderung des Druckkammervolumens pro Zeiteinheit bei der Bewegung des Verdrängers aus der ersten Stellung in die zweite Stellung bewirkt werden. Hierbei ist die Rückstellkraft der Membran vorzugsweise so dimensioniert, daß der durch die Rückstellkraft verursachte Unterdruck in der Druckkammer kleiner ist als ein in der zweiten Fluidleitung vorliegender Kapillardruck.

Die vorliegende Erfindung schafft ferner ein Verfahren zum Kalibrieren einer Mikrodosiervorrichtung der oben genannten Art, um nach einer einmaligen Kalibrierung während nachfolgender Dosierphasen reproduzierbare Ergebnisse zu erhalten. Die Mikrodosiervorrichtung gemäß der vorliegenden Erfindung kann ferner als Pipette verwendet werden, indem während der genannten ersten Phase die Auslaßöffnung in ein zu pipettierendes Fluid eingetaucht wird.

Bei anfänglicher Inbetriebnahme der Mikrodosiervorrichtung werden zunächst die Druckkammer und die Fluidleitungen mit einem Fluid befüllt, bevor die Betätigungsvorrichtung in der ersten Phase zum Ansaugen eines Fluids angesteuert wird. Die erfindungsgemäße Mikrodosiervorrichtung kann vorteilhaft unter Verwendung mikromechanischer Verfahren, insbesondere Verfahren der Halbleitertechnologie, hergestellt werden. Ferner kann die erfindungsgemäße Mikrodosiervorrichtung modular aufgebaut sein, derart, daß beispielsweise die Druckkammer, der Verdränger und optional zumindest Teile der ersten und der zweiten Fluidleitung als austauschbares Modul mittels mikromechanischer Verfahren aufgebaut sind. Ferner kann das Medienreservoir ein Teil des austauschbaren Moduls sein, wobei dasselbe ebenfalls mittels mikromechanischer Verfahren aufgebaut ist.

Wie bereits dargelegt, besteht ein wesentlicher Vorteil eines erfindungsgemäßen Dosiervorgangs darin, daß ein Fluidstrahl als Ganzes abgegeben wird, und nicht eine Vielzahl von Einzeltropfen addiert werden müssen, um die gewünschten Dosiervolumina, beispielsweise auf dem Gebiet der Biotechnologie, zu erhalten. Obwohl der genaue Abriß des Freistrahls an der Auslaßöffnung wie bei herkömmlichen Systemen von den Medieneigenschaften beeinflußt wird, wird gemäß der vorliegenden Erfindung dennoch eine höhere Dosiergenauigkeit erhalten. Da durch den Medienverdränger der erfindungsgemäßen Mikrodosiervorrichtung problemlos auch größere Volumina im gewünschten Bereich zwischen 0,01µl bis 0,1µl während eines Vorgangs abgegeben werden können, spielen Volumenfehler, die eine Folge eines Abrisses der Einzeltropfen sind und bei Tropfenvolumina von 0,0001µl einen großen relativen Fehler darstellen würden, keine Rolle mehr. Eine Summation der systematischen Fehler pro Tropfen tritt gemäß der vorliegenden Erfindung nicht mehr auf.

Bei der Rückstellung des Verdrängers in die zweite Stellung, wobei das Volumen der Druckkammer verringert wird, um das Fluid über die Auslaßöffnung als freien Strahl auszustoßen, ist die Bewegung des Fluids in der ersten Fluidleitung, d.h. dem Reservoirkanal, und der zweiten Fluidleitung, d.h. dem Düsenkanal, nahezu ausschließlich von der Relation der Flüssigkeitsträgheit in den betreffenden Fluidleitungen bestimmt, wobei die Relation der Strömungswiderstände der Fluidleitungen dagegen vernachlässigbar ist. Dadurch ist das definierte Fluidvolumen, das mittels der erfindungsgemäßen Mikrodosiervorrichtung ausgestoßen wird, nahezu unabhängig von der Viskosität, Oberflächenspannungen, usw. des zu dosierenden Mediums. Folglich kann mittels der vorliegenden Erfindung eine Dosierung sich in Viskosität und Oberflächenspannung unterscheidender Medien, wie sie beispielsweise in der Biotechnologie eingesetzt werden, durchgeführt werden.

Die erfindungsgemäße Mikrodosiervorrichtung kann ferner zur Pipettierung eines Fluids bzw. einer Flüssigkeit verwendet werden. Dazu wird ein Fluid über die Auslaßöffnung, die auch als Düse bezeichnet werden kann, aufgenommen, indem die Düse beispielsweise in ein zu pipettierendes Fluid eingetaucht wird. Nachfolgend wird das aufgenommene Fluid wie beschrieben wieder im Freistrahl abgegeben. Das Aufnehmen kann beispielsweise durch einen Unterdruck in dem Medienreservoir, der ein Einsaugen bewirkt, oder durch eine entsprechende Bewegung des Aktors erfolgen. Die erfindungsgemäße Mikrodosiervorrichtung eignet sich auch als solche Pipette, bei der die Auslaßöffnung der mit einer Inertflüssigkeit befüllten Druckkammer während der ersten Phase in ein zu pipettierendes Fluid eingetaucht wird oder ein zuvor unbefülltes System beim Eintauchen in das Fluid rein kapillar befüllt wird.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:

Fig. 1     eine schematische Querschnittdarstellung zur Veranschaulichung des Betriebs eines Ausführungsbeispiels der erfindungsgemäßen Mikrodosiervorrichtung;

Fig. 2     ein Diagramm, das ein Ansteuersignal zur Ansteuerung der Betätigungseinrichtung der erfindungsgemäßen Mikrodosiervorrichtung darstellt;

Fig. 3A     und 3B schematische Darstellungen von Ausführungsbeispielen zur Realisierung der erfindungsgemäßen Mikrodosiervorrichtung;

Fig. 4     eine schematische perspektivische Ansicht eines weiteren Ausführungsbeispiels der erfindungsgemäßen Mikrodosiervorrichtung;

Fig. 5     eine Darstellung des Dosiervolumens über der kinematischen Viskosität;

Fig. 6     eine Darstellung des Dosiervolumens über der Piezospannung;

Fig. 7     ein Schema zur Beschreibung der Dynamik einer erfindungsgemäßen Mikrodosiervorrichtung;

Fig. 8     eine schematische auseinandergezogene Darstellung eines Mikrodosiervorrichtungsarrays, das mit erfindungsgemäßen Mikrodosiervorrichtungen aufgebaut ist; und

Fig. 9     eine schematische Ansicht des in Fig. 8 dargestellten Mikrodosiervorrichtungsarrays in einem zusammengesetzten Zustand.

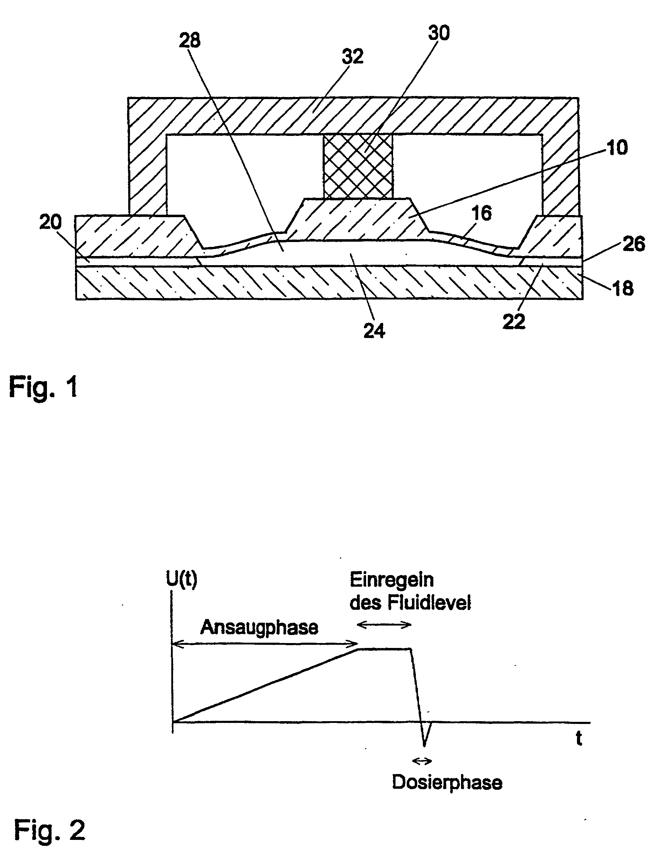

In Fig. 1 ist eine mögliche Ausführungsform der erfindungsgemäßen Mikrodosiervorrichtung, die sich speziell für eine Herstellung des Dosierelements mittels der Verfahren der Halbleitertechnologie eignet, dargestellt. Der Medienverdränger 10 ist bei dem dargestellten Ausführungsbeispiel als eine in Silizium geätzte versteifte Membran realisiert. Die Verdrängerstruktur ist dabei mittels eines anisotropen KOH-Ätzens hergestellt, das zu den trapezförmigen Ausnehmungen, die die Membran 16 definieren, führt. Neben einer versteiften Membran kann jedoch auch eine nichtversteifte Membran verwendet werden.

Bei dem in Fig. 1 dargestellten Ausführungsbeispiel der vorliegenden Erfindung ist die Verdrängerstruktur 10 mittels eines anodischen Bondens mit einer Pyrexglas-Platte 18 verbunden. In der Siliziumscheibe, in der die Verdrängerstruktur 10 definiert ist, sind bei dem bevorzugten Ausführungsbeispiel Ausnehmungen vorgesehen, die einen Reservoirkanal 20, einen Düsenkanal 22 sowie eine Druckkammer 24 definieren. Der Düsenkanal 22 ist mit einer Auslaßöffnung 26, die in Fig. 1 in gestrichelten Linien angedeutet ist, fluidmäßig verbunden. Die Auslaßöffnung 26 kann in der Form einer Düse ausgestaltet sein. Der Reservoirkanal 20 ist fluidmäßig mit einem Medienreservoir (nicht dargestellt) verbunden. Die Druckkammer 24 definiert ein durch eine Bewegung des Verdrängers regelbares Dosiervolumen 28. Eine piezoelektrische Betätigungseinrichtung, bei dem dargestellten Ausführungsbeispiel ein Piezostapel-Aktor 30, ist bei dem in Fig. 1 dargestellten Ausführungsbeispiel über ein Gegenlager 32 derart an der Mittenversteifung des Verdrängers angebracht, daß durch eine Ansteuerung des Piezostapels 30 der Medienverdränger 10 bewegt werden kann. Der Piezostapel 30 ist mit einer Steuereinrichtung (nicht dargestellt) elektrisch verbunden.

Die Druck- oder Dosier-Kammer 24, die Fluidleitungen 20, 22 und die Auslaßöffnung 26 können beispielsweise durch Standard-Ätztechniken in der Siliziumscheibe hergestellt sein. Durch ein anodisches Bonden der Siliziumscheibe auf eine Pyrexplatte (Glas) können die Dosierkammer und die Fluidleitungen hermetisch abgeschlossen werden. Alternativ könnte neben dem dargestellten Piezostapel-Aktor ein Piezo-Biegewandler oder eine Piezoplatte als Antrieb verwendet werden. Es ist jedoch offensichtlich, daß die vorliegende Erfindung nicht auf piezoelektrische Antriebe begrenzt ist, sondern auch andere Antriebe, beispielsweise elektromagnetische oder elektrostatische, verwendet werden können.

Vorzugsweise werden der Reservoirkanal, die Druckkammer, der Düsenkanal sowie die Verdrängermembran durch anisotrope KOH-Ätzungen, die zu trapezförmigen bzw. dreieckigen Kanalquerschnitten führen, hergestellt. Überdies sind jedoch andere beliebige Querschnittsformen möglich, beispielsweise Gräben mit senkrechten Wänden, die durch Trockenätztechniken erzeugt werden.

Neben dem oben beschriebenen Aufbau können die Kanäle und Ausnehmungen der mikromechanisch gefertigten Mikrodosiervorrichtung der vorliegenden Erfindung statt in Silizium auch in Pyrexglas strukturiert sein, wobei ferner eine Kombination einer Strukturierung in Silizium und Pyrexglas zur Realisierung verwendbar ist. Die Größe der bestimmenden Parameter, Flußwiderstand, fluidische Induktivität und Kapillardruck wird durch die Länge und die Ätztiefe der Kanäle bestimmt. Durch einen Mehrfachmaskenprozeß können die Ätztiefe der beiden Kanäle und der Druckkammer unabhängig voneinander variiert werden.

Wie in Fig. 1 dargestellt ist, wird als Medienverdränger 10 vorzugsweise eine mittenversteifte Membran 16 verwendet. Dabei kann die Mittenversteifung vorzugsweise als Ansatzfläche für den Aktor 30 verwendet werden. Bei der Verwendung einer versteiften Membran als Medienverdränger 10 kann bei gegebenem Stellweg des Aktors über die Membranweite der Dosierbereich angepaßt werden.

Anhand Fig. 2 wird nachfolgend ein Dosiervorgang gemäß einem bevorzugten Ausführungsbeispiel der vorliegenden Erfindung näher erläutert.

Zunächst erfolgt eine erstmalige Befüllung der Anordnung, d.h. der Fluidleitungen 20 und 22 sowie der Druckkammer 24, entweder selbständig durch Kapillarkräfte oder mittels einer externen Unterstützung durch Druckbeaufschlagung des Medienreservoirs, Einpumpen des Mediums oder Einsaugen der Flüssigkeit, beispielsweise durch eine Erzeugung eines Vakuums an der Auslaßöffnung. Am Ort der Auslaßöffnung, oder Düse, wird das Austreten des Mediums durch die Oberflächenspannung verhindert, während eine Rückströmung des Mediums in Richtung der Dosierkammer durch Kapillarkräfte verhindert wird. Der Flüssigkeitsmeniskus regelt sich also selbst auf die Position der Düse ein. Nach der erstmaligen Befüllung, die beispielsweise nur bei einem ersten Dosiervorgang nach einer länger anhaltenden Ruhephase der erfindungsgemäßen Dosiervorrichtung durchgeführt werden muß, werden die im Folgenden beschriebenen Schritte durchgeführt.

Während eines in Fig. 2 als Ansaugphase bezeichneten Intervalls wird zunächst ein Ansteuersignal, U(t), mit einer geringen Flankensteilheit an die Betätigungsvorrichtung angelegt. Dies bewirkt eine langsame Bewegung der Membran aus der Ausgangslage, durch die Dosierflüssigkeit von beiden Kanälen her, Düsenseite und Reservoirseite, in die Dosierkammer angesaugt wird. Die geringe Flankensteilheit des Ansteuersignals bewirkt, daß der zu dosierenden Flüssigkeit eine geringe Beschleunigung vermittelt wird. Je nach Fließwiderstand und Kapillardruck der einzelnen Kanäle saugt die Membran unterschiedliche Teilvolumina aus den beiden Kanälen. Die Flüssigkeitsträgheit ist wegen des langsamen Vorgangs zu vernachlässigen. Bei dem Vorgang ist jedoch darauf zu achten, daß der Düsenkanal nicht vollständig entleert wird, und somit Luft in die Dosierkammer gerät. Dies kann sichergestellt werden, indem die Ansteuerung des Aktors, d.h. die Flankensteilheit des Ansteuersignals, der Relation der Strömungswiderstände der mit dem Medienreservoir verbundenen Fluidleitung und der mit der Düse verbundenen Fluidleitung angepaßt wird.

Nachfolgend erfolgt bei dem in Fig. 2 dargestellten Ausführungsbeispiel des erfindungsgemäßen Verfahrens eine Phase, die mit "Einregeln des Fluidlevels" bezeichnet ist. Diese Einregelung des Flüssigkeitsmeniskus auf das Düsenende erfolgt infolge von Kapillarkräften und Oberflächenspannungen selbsttätig. Die Dauer dieses Vorgangs wird bestimmt durch den Strömungswiderstand der Kanäle und eventuell der Dosier-kammer, wobei jedoch der Strömungswiderstand der Dosierkammer im Vergleich zum Strömungswiderstand der Kanäle in den meisten Fällen vernachlässigbar ist, die physikalischen Eigenschaften des Mediums, d.h. der Viskosität, und dem hydrostatischen Druck in dem Reservoir. Diese Phase des Einregelns des Fluidlevels ist optional, da dieselbe entfallen kann, wenn die Ansaugphase genügend langsam erfolgt, wobei sich in diesem Fall der Flüssigkeitsmeniskus stets am Ort der Düse befindet.

In einer dritten Phase, die in Fig. 2 mit "Dosierphase" bezeichnet ist, wird der Verdränger durch eine geeignete Ansteuerung der Betätigungseinrichtung durch die Steuereinrichtung nun sehr rasch in dessen Ausgangslage zurückgestellt. Dies wird durch ein Ansteuersignal mit einer großen Flankensteilheit, durch das der Flüssigkeit eine große Beschleunigung vermittelt wird, realisiert. Dadurch wird Flüssigkeit über die Düse als freier Strahl ausgestoßen. Die Bewegung der Flüssigkeit im Reservoir- und im Düsen-Kanal ist unter diesen Umständen nahezu ausschließlich von der Relation der Flüssigkeitsträgheit in den betreffenden Fluidleitungen bestimmt, wohingegen die Relation der Strömungswiderstände vernachlässigbar ist. Wenn die Trägheit der Flüssigkeit in der Fluidleitung zwischen der Dosierkammer und der Düse klein gegenüber der Trägheit der Flüssigkeit in der Fluidleitung zwischen der Dosierkammer und dem Reservoir ist, so ist die Rückströmung von Flüssigkeit in das Reservoir vernachlässigbar. Ist die Trägheit der Flüssigkeit in dem Reservoirkanal hingegen nicht vernachlässigbar, so kann die damit verbundene Rückströmung durch eine Kalibrierung bestimmt und bei einer nachfolgenden Dosierung kompensiert werden. Dies ist möglich, da die Induktivität L, d.h. die Trägheit, einer Fluidleitung lediglich von deren Geometriedaten, L = Leitungslänge/Leitungsquerschnitt, nicht aber von den physikalischen Eigenschaften der in derselben enthaltenen Flüssigkeit abhängt.

Der Anteil der beschleunigten Flüssigkeitsmenge in Düsenrichtung und Reservoirrichtung bei schnellen Änderungen des Verdrängers, d.h. bei einer Vernachlässigung von Strömungswiderständen, ist gegeben durch:

$$\frac{d\Phi_d}{d\Phi_r} = \frac{\frac{d\Phi_d}{dt}}{\frac{d\Phi_r}{dt}} = \frac{\frac{\Delta p_d}{\rho L_d}}{\frac{\Delta p_r}{\rho L_r}} = \frac{\Delta p_d \, L_r}{\Delta p_r \, L_d} \approx \frac{L_r}{L_d} \qquad \text{(Gl.1)}$$

wobei $\phi_d$ und $L_d$ den Volumenstrom beziehungsweise die Induktivität in Düsenrichtung angeben, und $\phi_r$ und $L_r$ den Volumenstrom bzw. die Induktivität in Reservoirrichtung angeben.

In der Regel sind die hydrostatischen Drücke, die sich aus der Höhendifferenz zwischen dem Füllstand im Reservoir und der Lage der Düse ergeben können, ebenso wie die Druckdifferenzen zwischen dem Luftdruck der Umgebung und dem Druck in der Reservoirkammer, beide vernachlässigbar gegen die in der Druckkammer bei einer schnellen Änderung des Verdrängers anliegenden Drücke, die mehrere bar betragen können. Dadurch sind die Druckdifferenzen $\Delta p_d$ und $\Delta p_r$ nahezu identisch, weshalb die Anteile der Flüssigkeitsströmungen in Düsenrichtung bzw. in Rückwärtsrichtung in einer festen Relation stehen. Diese Relation ist unabhängig von der Viskosität und der Dichte $\rho$ der enthaltenen Flüssigkeit. Daher kann das durch die Rückströmung durch den Reservoirkanal verlorengehende Volumen in der ersten Phase des Dosiervorgangs, d.h. das langsame Bewegen des Verdrängers zur Erhöhung des Druckkammervolumens, einfach berücksichtigt werden.

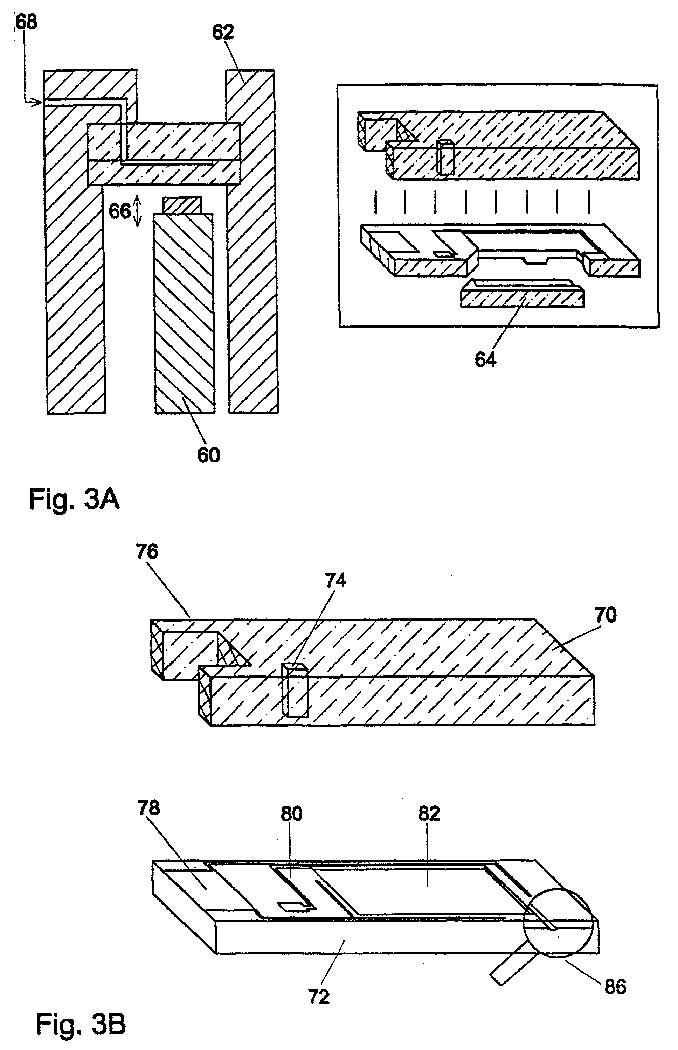

Die Bewegung des Verdrängers beim Ausstoßen der Flüssigkeit kann direkt in die Ruhelage erfolgen. Alternativ kann, wie wiederum in Fig. 3 dargestellt ist, die Bewegung des Verdrängers beim Ausstoßen der Flüssigkeit mit einer geringen Gegenbewegung abgeschlossen werden, siehe Ende der Dosierphase. Durch diese Gegenbewegung tritt eine Gegenbeschleunigung auf, die den Abriß des Flüssigkeitsstrahls begünstigen kann.

Durch die Bewegung des Verdrängers in der Ansaugphase, die eine definierte Volumenänderung pro Zeit, was einem Ansaugvolumenstrom entspricht, erzeugt, wird ein Unterdruck in der Druckkammer bewirkt, wobei dieser Unterdruck beim Dosieren, d.h. wenn die erfindungsgemäße Vorrichtung als Dispenser verwendet wird, je nach Ansaugvolumenstrom und Viskosität bestimmte Werte nicht überschreiten darf. Bei einem geringen Ansaugvolumenstrom und einer geringen Viskosität ist der Unterdruck kleiner als der Kapillardruck in der zweiten Fluidleitung zwischen der Druckkammer und der Düse, so daß die zweite Fluidleitung während der gesamten Zeit vollständig von dem Fluid gefüllt bleibt und das Ansaugen vollständig aus dem Medienreservoir erfolgt. Somit kann die Gefahr eines Ansaugens von Luft durch den Düsenkanal ausgeschlossen werden.

Liegt jedoch ein hoher Ansaugvolumenstrom und eine große Viskosität vor, ist der Unterdruck größer als der Kapillardruck der zweiten Fluidleitung. Somit erfolgt das Ansaugen des Fluidvolumens durch beide Fluidleitungen. Sofern dabei keine Luft in die Dosierkammer eintritt, füllt sich nach Beendigung der Verdrängerbewegung, wie oben erläutert, das Leitungssystem wieder vollständig bis zur Auslaßöffnung durch die Kapillarkraft. In diesem Fall ist die zwischen der Ansaugphase und Dosierphase stattfindende Einregelphase für den Fluidpegel vorgesehen.

Im Folgenden werden weitere alternative Ausführungsbeispiele der erfindungsgemäßen Mikrodosiervorrichtung dargelegt. Im Ausgangszustand des Dosierzyklusses kann der Verdränger vorgespannt sein und durch den Aktor in dieser Lage gehalten werden, beispielsweise in die Dosierkammer hineingedrückt. Der Verdränger läßt sich dabei in Richtung einer weiteren Vorspannung durch eine weitere Auslenkung des Aktors bewegen. Entgegen der Vorspannungsrichtung bewegt sich der Verdränger bei nachlassender Aktorauslenkung allein durch seine Rückstellkraft. Durch diese Variante ist keine feste Verbindung zwischen Aktor und Verdränger notwendig. Eine potentielle Klebeverbindung zwischen Aktor und Verdränger entfällt und der Montageaufwand reduziert sich erheblich.

Die oben beschriebene Alternative, Aktor und Verdränger ohne feste Verbindung zu verwenden, ermöglicht einen modularen Aufbau des Dosierelements. Ein solcher Aufbau ist zur Veranschaulichung in den Fig. 3A und 3B dargestellt. Dabei sind die Elektronik und der Antrieb, beispielsweise ein Piezo-Stapelaktor 60 fest in einem Gehäuse 62 eingebaut, während ein Chip 64, der den Medienverdränger aufweist, auswechselbar ist. Durch den Pfeil 66 in Fig. 3A ist die Bewegungsrichtung des Piezo-Stapelaktors angegeben. Ferner ist in Fig. 3A eine Fluidleitung 68, die durch das Gehäuse verläuft, dargestellt. Der rechtsseitige Teil von Fig. 3A stellt eine Vergrößerung der mikromechanisch gefertigten Komponenten der Mikrodosiervorrichtung dar, wobei die Pyrexplatte und der Siliziumchip getrennt dargestellt sind.

Eine Vergrößerung dieser mikromechanisch gefertigten Komponenten der Mikrodosiervorrichtung ist in auseinandergezogener Form in Fig. 3B dargestellt. Diese Komponenten sind durch eine Pyrexplatte 70, die beispielsweise mittels anodischem Bonden mit einem Siliziumchip 72 verbunden ist, gebildet. Eine Fluidleitung 74, die mit einem Medienreservoir (nicht dargestellt) fluidmäßig verbunden ist, verläuft durch die Pyrexglasplatte 70. Die Pyrexglasplatte 70 weist ferner eine Ausnehmung 76 auf, um eine elektrische Kontaktierung von Anschlußflächen 78 auf dem Siliziumchip zu ermöglichen. Der Reservoirkanal ist bei 80 dargestellt, während die Dosierkammer bei 82 gezeigt ist. Mittels einer weiteren Vergrößerung 86 ist in Fig. 3B das Auslaßende oder die Düse der Mikrodosiervorrichtung 86 schematisch dargestellt.

Bei der beschriebenen modularen Konfiguration ist es vorteilhaft, wenn zwischen dem Aktor und dem Verdränger keine Klebeverbindung, sondern lediglich ein mechanischer Kontakt zur Erzeugung einer Vorspannung, wie oben beschrieben wurde, notwendig ist.

Ferner ist eine Beschichtung der Düse mit einem hydrophoben Material vorteilhaft, da dadurch die Oberflächenspannung erhöht wird und ein Austreten von Flüssigkeit durch die Düse im Ruhezustand weiter unterdrückt wird. Diesbezüglich ist insbesondere eine Beschichtung außerhalb der Düse in der Umgebung entlang des Umfangs derselben mit einem hydrophoben Material vorteilhaft. Jedoch kann auch die Innenseite des zweiten Fluidkanals hydrophob beschichtet sein.

Die Auslaßöffnung der erfindungsgemäßen Vorrichtungen kann alternativ als ein Düsenarray ausgebildet sein, das aus beispielsweise 10 Düsen besteht. Dadurch ist es möglich, ein Array von Flüssigkeitsstrahlen zu erzeugen, wobei jeder einzelne Strahl nur ein Zehntel des gesamten Dosiervolumens enthält. Dadurch ergibt sich die Funktionalität sogenannter Mehrkanal-Pipetten, die zur Dosierung in sogenannte Mikrotiterplatten verwendet werden. Ferner wirkt bei mehreren kleinen Düsen im Vergleich zu einer großen Düse eine größere Kapillarkraft auf die Austrittsseite, wodurch eine Rückströmung beim Ansteuern mit einem Signal geringer Flankensteilheit reduziert wird.

Bei alternativen Ausführungsbeispielen der vorliegenden Erfindung kann neben der beschriebenen planaren Anordnung von Düse und Chip auch eine vertikale Anordnung der Düse zu dem Chip implementiert sein, bei der der Ausstoß des Fluids aus der Düse senkrecht zu dem Chip stattfindet. Eine vertikale Anordnung ist vorteilhaft dahingehend, daß die Dosiervorrichtung, d.h. der Aktor, der Chip und die Düse, axial aufgebaut sein kann, wie dies der Gewohnheit von Anwendern beispielsweise üblicher Pipetten entspricht.

Eine geeignete Anpassung der erfindungsgemäßen Mikrodosiervorrichtung auf ein gewünschtes Dosiervolumen V mit einer maximal erlaubten Dosiergenauigkeit dV geschieht vorzugsweise auf die nachfolgend beschriebene Weise.

Die Ungenauigkeit dV des dosierten Gesamtvolumens entspricht etwa der Größe eines hypothetisch an der Düse abreißenden Einzeltropfens, dessen Durchmesser sich wiederum in erster Näherung aus dem doppelten Düsendurchmesser ergibt. Bei Annahme eines kugelförmigen Tropfens ($dV - 1/3d^3\pi$) ergibt sich als Abschätzung für die obere Grenze des Düsendurchmessers d:

$$d < (3dV / 4\pi)^{1/3}$$

Bei einer gewünschten Dosiergenauigkeit von 1 nl bedeutet dies, daß ein Düsendurchmesser < 60μm zu wählen ist.

Ferner wird gemäß der vorliegenden Erfindung ein Aktor mit einer ausreichenden Leistung verwendet, damit das gewünschte Volumen V mittels der Auslenkung einer flexiblen Wand der Dosierkammer innerhalb einer sehr kurzen Zeit durch die Düse verdrängt werden kann, wobei die Zeit so kurz sein muß, daß die Tropfen durch ihre Beschleunigung auch an der Düse abreißen. Zum Kalibrieren der erfindungsgemäßen Mikrodosierungsvorrichtung kann beispielsweise einmalig, sozusagen herstellerseitig, das Verhältnis der Fluidmenge, die in Richtung Düse verdrängt wird, und der Fluidmenge, die in Richtung Reservoir verdrängt wird, bestimmt werden. Der Flüssigkeitsverlust in Richtung Reservoir kann bei nachfolgenden Dosiervorgängen dann durch eine entsprechend größere Verdrängung, die durch den Verdränger bewirkt wird, kompensiert werden.

Die erfindungsgemäße Mikrodosiervorrichtung kann auch als Pipette verwendet werden. Dabei wird die Düse, oder die Auslaßöffnung, zum Aufnehmen von Flüssigkeit in das zu pipettierende Medium eingetaucht. Die Grenzschicht zwischen Flüssigkeit im Düsenkanal und Luft in der Umgebung wird durch eine Grenzschicht zwischen zwei Flüssigkeiten ersetzt. Dabei ist die Flüssigkeit in der Dosierkammer als ein Inertkolben zu betrachten, der nur ein inkompressibles Medium darstellt, welches mit der zu pipettierenden Flüssigkeit keine Wechselwirkung eingeht. Da die Grenzfläche zur Luft wegfällt, ist der Kapillardruck in der zweiten Fluidleitung, d.h. zwischen der Druckkammer und der Auslaßöffnung, wesentlich reduziert, da er durch den Kapillardruck der eintretenden Flüssigkeit teilweise oder ganz kompensiert bzw. eventuell sogar überkompensiert wird. Im folgenden wird nun der Ablauf einer Pipettierung dargelegt.

Die Düse wird in die aufzunehmende Flüssigkeit gehalten, woraufhin der Verdränger aus der ersten in die zweite Stellung bewegt wird. Diese Bewegung entspricht der in der Fig. 2 dargestellten Ansaugphase. Der Vorgang wird nun im wesentlichen vom Unterdruck in der Dosierkammer und dem Strömungswiderstand in der Fluidleitung bestimmt. Die Strömungskanäle zur Düse sind so auszulegen, daß eine Durchmischung der beiden Flüssigkeiten möglichst unterdrückt wird. Die Bewegung des Verdrängers während dieses Ansaugvorgangs wird nicht nur durch einen Flüssigkeitsstrom des zu pipettierenden Mediums durch die Düse kompensiert, sondern zum Teil auch durch einen Volumenstrom aus dem Reservoir in die Dosierkammer. Daher muß die Volumenveränderung des Verdrängers größer sein als das aufzunehmende, zu pipettierende Volumen. Dieses Problem kann auf zwei Arten gelöst werden.

Zum einen kann der Verdränger so angesteuert werden, daß er eine deutlich größere Volumenbewegung ausführt, so daß der Anteil, der durch eine Aufnahme des zu pipettierenden Mediums kompensiert wird, auf jeden Fall größer als die gewünschte nachfolgende Abgabemenge ist. Alternativ kann die Düse aus dem zu pipettierenden Medium herausgenommen werden, woraufhin der Verdränger durch ein Ansteuersignal geringer Flankensteilheit aus der zweiten Stellung in die erste Stellung zurückgebracht wird. Hierbei geht kein Medium verloren, wenn der Druck in der Dosierkammer während dem gesamten Vorgang kleiner ist als der notwendige Druck, um Flüssigkeit auszustoßen bzw. ausfließen zu lassen. Jetzt kann wiederum der Schritt des Ansaugens wiederholt werden, so daß die doppelte bzw. ein Mehrfaches der Flüssigkeitsmenge aufgenommen werden kann. Nachfolgend kann eine Dosierphase durch ein Signal mit hoher Flankensteilheit, wie oben bezugnehmend auf Fig. 2 beschrieben wurde, erfolgen. Eine überflüssige Menge des zu pipettierenden Mediums im Düsenkanal kann in einen Abfallbehälter ausgestoßen werden.

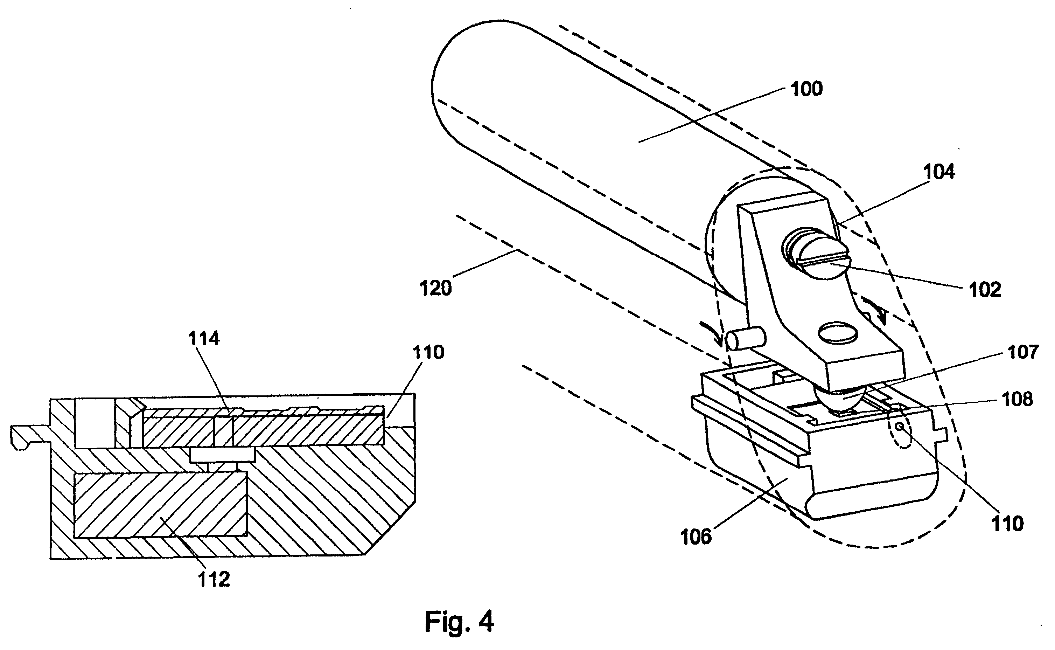

In Fig. 4 ist ein weiteres bevorzugtes Ausführungsbeispiel einer erfindungsgemäßen Mikrodosierungsvorrichtung dargestellt. Ein Piezostapelaktor 100 ist über eine Schraubverbindung 102 mit einem Kraftübertragungsglied 104 verbunden. Das Kraftübertragungsglied 104 besitzt die Form eines drehbar gelagerten Hebellenkers, der in der Richtung der in Fig. 4 dargestellten Pfeile schwenkbar ist. Mittels des Hebellenkers 104 wird eine durch den Piezostapelaktor 100 erzeugte Kraft auf ein Dosiermodul 106 übertragen. Der Hebellenker 104 weist dabei einen Vorsprung 107 auf, der die vom Piezostapelaktor 100 erzeugte Kraft auf einen Druckpunkt 108 der Dosierkammer überträgt. Bei 110 ist in Fig. 4 die Düse oder Auslaßöffnung dargestellt. Alternativ zu dem dargestellten Hebellenker könnte als Kraftübertragungsglied auch eine Hydraulik verwendet werden.

Die Schraubverbindung 102 stellt in Kombination mit einer darunterliegenden Feder in der Konstruktion sicher, daß der ebenfalls nicht starr mit dem Piezoaktor 100 verbundene Hebellenker 104 immer an den Piezoaktor 100 angepreßt wird.

Im linken Teil von Fig. 4 ist getrennt das Dosiermodul dargestellt, wobei die Düse 110 über eine Fluidleitung mit dem Medienreservoir 112 verbunden ist. Wiederum ist bei diesem Ausführungsbeispiel der Dosierchip 114, der zumindest die Druckkammer und die Verdrängermembran umfaßt, auswechselbar. In Fig. 4 ist ferner schematisch durch gestrichelte Linien 120 schematisch eine Gehäusekontur der fertigen Mikrodosiervorrichtung dargestellt. Wie in Fig. 4 ohne weiteres zu entnehmen ist, kann bei dem dargestellten Ausführungsbeispiel auch das gesamte Fluidmodul auswechselbar sein.

Auch bei dem in Fig. 4 dargestellten Ausführungsbeispiel sind der Aktor und der Verdränger nicht fest miteinander verbunden. Der Aktor wird lediglich in Kontakt mit dem Verdränger gebracht. Dadurch ergibt sich eine Vielzahl von Vorteilen.

Zum einen muß keine Klebeverbindung oder sonstige Befestigung hergestellt werden, so daß, wie oben erläutert wurde, allein das Dosiermodul ausgetauscht und der Aktor wiederverwendet werden kann. Dies stellt eine kostengünstige Lösung dar, wenn beispielsweise das Dosiermodul verstopft ist und der Dosierchip gewechselt werden muß.

Da der Kontakt zwischen dem Aktor und dem Verdränger rein berührend ist, also keine feste Verbindung zwischen denselben vorliegt, kann zusätzlich eine Schutzfunktion zur Vermeidung einer Luftansaugung durch die Fluidleitung zwischen der Düse und der Druckkammer realisiert werden. Diese Schutzfunktion wird wie folgt erzielt. Der Aktor befindet sich zu Beginn einer Freistrahldosierung bereits in Kontakt mit dem Verdränger, wobei der Verdränger in dieser Ausgangsstellung entweder kräftefrei am Aktor anliegt oder auch bereits eine vorbestimmte Vorauslenkung aufweisen kann. Bei einer Bewegung des Verdrängers in der zweiten Phase, um ein Fluid aus der Düse auszustoßen, schiebt daher der Aktor den Verdränger vor sich her. Die zunehmende Auslenkung des Verdrängers führt dabei zu einer ansteigenden Rückstellkraft auf den Aktor, aufgrund derer der Kontakt zwischen Aktor und Verdränger während der gesamten Bewegung erhalten bleibt.

Beim Zurückfahren des Verdrängers während der Ansaugphase kann der Aktor bei einer fehlenden festen Verbindung desselben zu dem Verdränger keine Zugkräfte auf den Verdränger ausüben. Es sind nun zwei Fälle denkbar, je nach dem, ob die Bewegung des Aktors oder die Bewegung des Verdrängers langsamer sind. Wenn der Aktor genügend langsam zurückbewegt wird, limitiert die zeitliche Bewegung des Aktors gleichzeitig die zeitliche Bewegung des Verdrängers und damit auch den Ansaugvolumenstrom. Aktor und Verdränger bleiben ständig in Kontakt, da die Rückstellkraft des Verdrängers eine Bewegung in dieselbe Richtung bewirkt.

Wenn der Aktor hingegen schnell zurückbewegt wird, so geht der Kontakt zum Verdränger während dieses Vorgangs verloren. In diesem Fall ist die Rückstellkraft des Verdrängers nicht groß genug, um dem Aktor zu folgen. Die Ursache liegt darin, daß durch die Rückstellkraft des Verdrängers in der Dosier-kammer ein Unterdruck erzeugt wird. Abhängig von der Viskosität des Mediums und der Geometrie der Kanäle führt dieser Unterdruck zu einem definierten Ansaugvolumenstrom durch die erste und die zweite Fluidleitung, wie oben erläutert wurde. Hierbei stellt sich der Beitrag einer Fluidleitung zum Gesamtvolumenstrom im wesentlichen entsprechend den wirksamen Strömungswiderständen beider Fluidleitungen und dem in der zweiten Fluidleitung zusätzlich wirksamen Kapillardruck ein. Ist dieser Ansaugvolumenstrom geringer als der Volumenstrom, welcher der Aktorbewegung entsprechen würde, so hindert er den Verdränger an einer entsprechend schnellen Relaxation und führt dazu, daß sich der Verdränger langsamer in die Ausgangslage zurückbewegt als der Aktor.

Der oben genannte Effekt kann nun ausgenutzt werden, um den maximal in der Dosierkammer wirkenden Unterdruck und damit den maximalen Ansaugvolumenstrom zu beschränken. Wird die Rückstellkraft des Verdrängers beispielsweise durch eine genügend dünne Membran derart klein dimensioniert, daß der durch den Verdränger maximal erzielbare Unterdruck in der Dosierkammer kleiner ist als der Kapillardruck in der zweiten Fluidleitung, so bleibt diese Fluidleitung während der gesamten Zeit vom Fluid gefüllt und das Ansaugen erfolgt vollständig von dem Medienreservoir. Somit kann ein Ansaugen von Luft durch die zweite Fluidleitung nicht auftreten. Ferner führt dieser Effekt dazu, daß während der Ansaugphase stets eine kleine Volumenänderung des Druckkammervolumens pro Zeiteinheit bewirkt wird.

Wie oben dargelegt, kann somit die fehlende feste Verbindung des Verdrängers mit dem Aktor als eine eingebaute Schutzvorrichtung, um ein Ansaugen von Luft zu verhindern, betrachtet werden.

Bei den in den Fig. 3A, 3B und 4 dargestellten Ausführungsbeispielen muß, nach dem Einsetzen des Dosiermoduls, eine Feinjustage des Aktors im Bereich weniger μm erfolgen. Für diese mechanische Feinjustage des Aktors ist eine Mikrometerschraube vorgesehen. Diese Mikrometerschraube ist in den Figuren nicht dargestellt, da sich dieselbe vorzugsweise auf der abgewandten Seite des Piezostapelaktors im Gehäuse befindet. Eine Feinjustage kann jedoch auch automatisch durchgeführt werden, indem der Kontakt zwischen Verdränger und Aktor durch einen Sensor, beispielsweise einen kapazitiven Abstandssensor, einen elektrischen Stromkreis, usw., detektiert wird. Für eine automatische Feinjustage mit einem geschlossenen Stromkreis als Kontaktsensor wird zwischen den Aktor, d.h. bei dem Ausführungsbeispiel von Fig. 4 das Kraftübertragungsglied, und das Dosiermodul eine sehr geringe Spannung angelegt, beispielsweise in der Größenordnung von 1 V. Wenn sich der Aktor bzw. das Kraftübertragungsglied und der Verdränger mechanisch berühren, wird ein Stromkreis geschlossen, woraufhin ein entsprechendes elektrisches Signal vorliegt. Die Positionierung kann auch automatisch erfolgen, indem die Spannung an dem Aktor so lange verändert wird, bis der geschlossene Stromkreis entsprechend den Kontakt zwischen dem Aktor bzw. dem Kraftübertragungsglied und dem Verdränger meldet. Die somit ermittelte Spannung kann dann allen anderen Signalen als Offset überlagert werden. Somit ist eine Feinjustage vollautomatisch möglich.

Der Betrieb der erfindungsgemäßen Mikrodosiervorrichtung ist zumindest in einem ausreichenden Betriebsbereich unabhängig von der Viskosität des zu dosierenden Mediums, wenn der Antrieb genügend stark ausgelegt wird, beispielsweise durch einen Piezostapelaktor, und wenn die Verdrängermembran genügend steif ist, beispielsweise durch eine mittenversteifte Siliziummembran. Alternativ zu einem Piezostapelaktor kann auch mechanische Federn, sowie elektrostatische oder hydraulische Betätigungselemtente als Antriebsglieder zum Einsatz kommen. Durch die erfindungsgemäßen Mikrodosiervorrichtungen läßt sich der Dosierfehler somit grob gesprochen um die Anzahl der in der Fluidmenge enthaltenen Einzeltropfen reduzieren. Der Betrieb der erfindungsgemäßen Mikrodosiervorrichtungen kann weiter verbessert werden, indem dafür gesorgt wird, daß der größte Anteil der Flüssigkeit durch die Düse ausgestoßen wird, während nur ein kleiner Anteil in Richtung Reservoir zurückfließt. Jedoch ist, auch wenn eine solche Vorzugsrichtung nicht existiert, das Verhältnis der jeweiligen Flußanteile unabhängig von der Viskosität und der Temperatur konstant und somit korrigierbar.

Bei einem weiteren bevorzugten Ausführungsbeispiel der vorliegenden Erfindung wird ein zwangsgesteuerter Verdränger, d.h. ein rückwirkungsfreier Aktor und ein möglichst steifer Verdränger, verwendet, um die Dynamik zu verbessern und somit die Möglichkeiten zu schaffen, auch hochviskose Medien noch genügend zu beschleunigen.

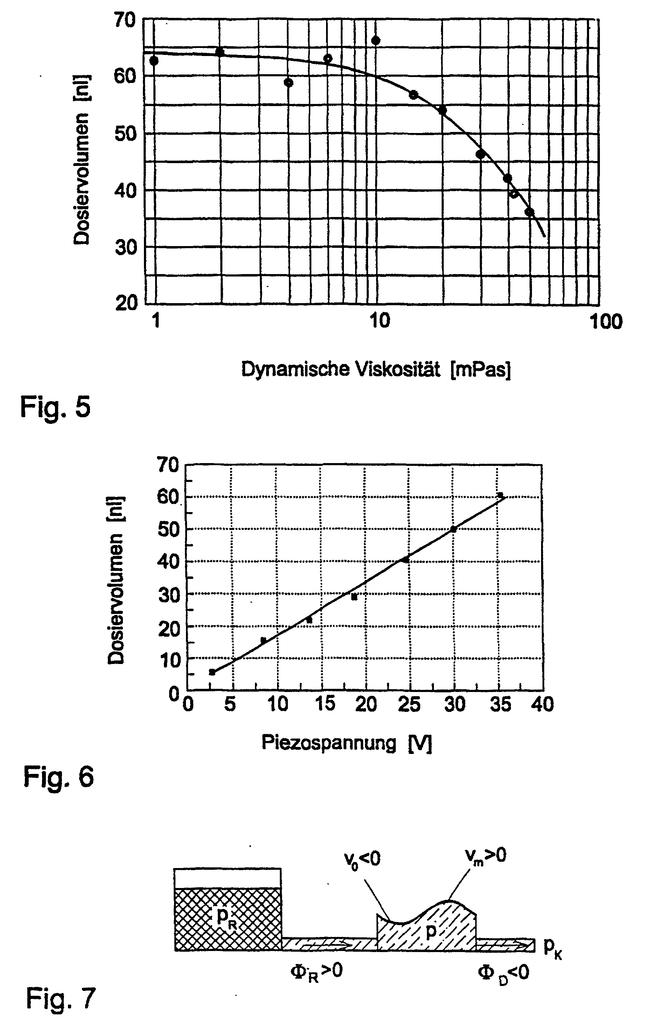

In Fig. 5 ist das Dosiervolumen in nl über der dynamischen Viskosität in mPas aufgetragen. Wie der in Fig. 5 dargestellten Kennlinie deutlich zu entnehmen ist, ergibt sich eine erkennbare Abhängigkeit des Dosiervolumens von der Viskosität erst ab einem Viskositätsbereich von ca. 20 mPas. Zur Ermittlung der in Fig. 5 dargestellten Kennlinie wurden als Medien Glycerin-Wasser-Lösungen in unterschiedlichen Mischungsverhältnissen verwendet.

Fig. 6 zeigt die Abhängigkeit des Dosiervolumens von der an die Betätigungseinrichtung angelegten Piezospannung. Wie in Fig. 6 zu sehen ist, ergibt sich ein im wesentlichen linearer Verlauf, wobei als Testmedium Wasser verwendet wurde.

Die erfindungsgemäßen Mikrodosiervorrichtungen eignen sich ferner zum Aufbau eines Mikrodosiervorrichtungsarrays. Dabei kann eine Mehrzahl von erfindungsgemäßen Mikrodosiervorrichtungen beliebig nebeneinander, also parallel, angeordnet und individuell angesteuert werden. Es ist dabei möglich, beispielsweise vier Düsen innerhalb einer Fläche von weniger als einem Quadratmillimeter anzuordnen und individuell zu adressieren. Mittels eines solchen Mikrodosiervorrichtungsarrays können unterschiedliche Medien ausgegeben werden, die sich erst nach dem Abschuß in der Luft vermengen. Daneben können auch mehrere Dosiervorrichtungen des Arrays von einer Betätigungseinrichtung angesteuert werden, deren Kraft über ein Kraftübertragungsglied auf mehrere Dosiervorrichtungen gleichzeitig verteilt wird.

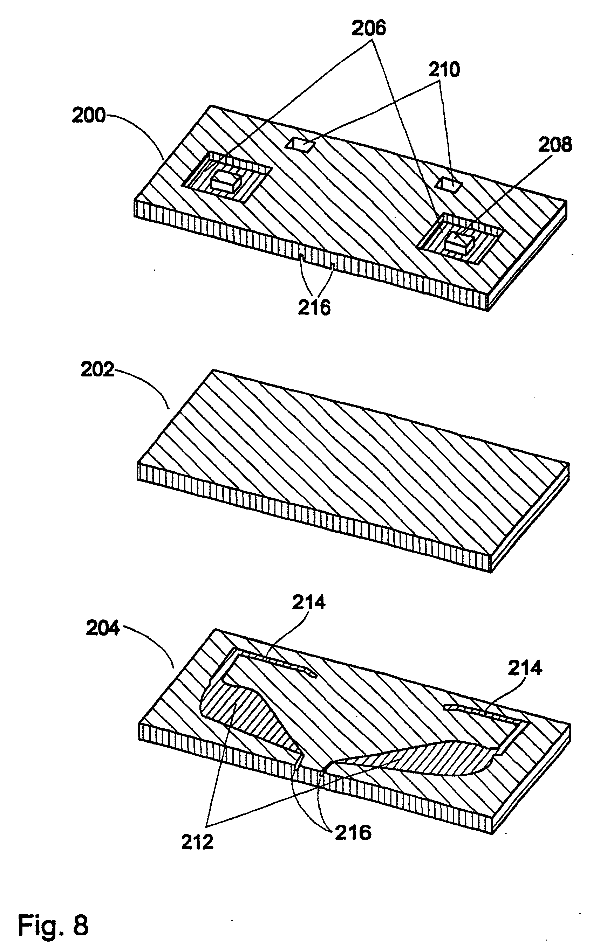

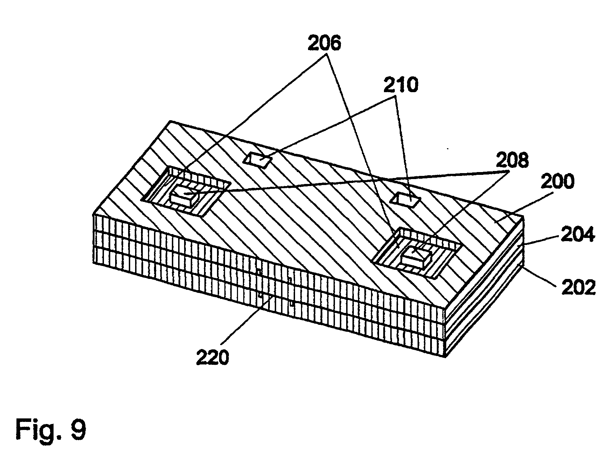

Ein Ausführungsbeispiel eines Mikrodosiervorrichtungsarrays, das aus erfindungsgemäßen Mikrodosiervorrichtungen aufgebaut ist, ist in den Fig. 8 und 9 dargestellt.

Wie in Fig. 8 dargestellt ist, kann ein solches Mikrodosiervorrichtungsarray aus einer Struktur, die eine erste Siliziumschicht 200, eine Pyrex-Glasplatte 202 und eine zweite Siliziumschicht 204 umfaßt, gebildet sein. In der ersten Siliziumschicht 200 sind bei dem dargestellten Ausführungsbeispiel die Strukturen für zwei Mikrodosiervorrichtungen gebildet. Dazu sind zwei Verdrängermembranen 206, die jeweils eine Versteifung 208 aufweisen, in der Siliziumschicht 200 gebildet. Die Verdrängermembranen 206 sind über die Versteifungen 208 betätigbar. Ferner sind Fluidkanäle 210, die die Druckkammer mit einem Medienreservoir (nicht dargestellt) verbinden, in der ersten Siliziumschicht angeordnet.

Der Aufbau der zweiten Siliziumschicht 204 ist im wesentlichen identisch zu dem der ersten Siliziumschicht 200. In Fig. 8 ist die zu der bezüglich der ersten Schicht 200 dargestellten Oberfläche gegenüberliegende Oberfläche der zweiten Siliziumschicht 204 zu sehen. Somit sind hinsichtlich der zweiten Siliziumschicht 204 die in derselben gebildeten Druckkammern 212 und die die Druckkammern 212 mit einem Medienreservoir verbindenden Fluidleitungen 214 zu erkennen. Dei Fluidleitungen 214 einer jeweiligen Siliziumschicht münden dabei in die Fluidkanäle 210 der jeweiligen Schicht. In Fig. 8 sind ferner die Fluidleitungen dargestellt, die die Druckkammern mit einer jeweiligen Auslaßöffnung 216 verbinden.

Die Pyrexglasplatte 202 wird zwischen den beiden Siliziumschichten 200 und 204 angeordnet, derart, daß jeweilige Hauptoberflächen derselben jeweils mit der Oberfläche der ersten und der zweiten Siliziumschicht, in der die Druckkammern 212 gebildet sind, verbunden werden. Die Druckkammern und die Fluidleitungen sind somit jeweils durch die Strukturen in den Siliziumschichten und die Oberflächen der Pyrex-Glasplatte gebildet.

Die dadurch gebildete Struktur, die in Fig. 9 dargestellt ist, weist ein Düsenarray 220 auf, das durch die vier Auslaßöffnungen 216 in der ersten und der zweiten Siliziumscheibe gebildet ist. Jeder Düse des 2x2-Arrays 220 ist eine Verdrängermembran 206 mit zugehöriger Betätigungseinrichtung (in Fig. 8 und 9 nicht dargestellt) zugeordnet, so daß die Düsen einzeln adressierbar sind.

Es ist offensichtlich, daß unter Verwendung des oben beschriebenen Aufbaus Mikrodosiervorrichtungsarrays mit einer nahezu beliebigen Anzahl von Mikrodosiervorrichtungen aufgebaut werden können. Überdies ist es offensichtlich, daß die Fluidkanäle der jeweiligen Druckkammern entweder mit dem gleichen oder mit unterschiedlichen Medienreservoiren verbunden sein können. Bei der Herstellung der oben beschriebenen Mikrodosiervorrichtungen und Mikrodosiervorrichtungsarrays können ferner Mikrospritzguß-Verfahren und Heißprägeverfahren vorteilhaft eingesetzt werden.

Im Folgenden wird vereinfacht die Dynamik des Dosiervorgangs dargestellt. Dabei sei ein Strömungswiderstand als R und eine fluidische Induktivität als L definiert. Der Druckabfall über einen Strömungskanal setzt sich aus einem Druckabfall $\Delta p_{laminar}$, der dazu dient den Strömungswiderstand zu überwinden, und einen Druckabfall $\Delta p_{träge}$, der die Flüssigkeit im Kanal beschleunigt, zusammen. Somit gilt für die Druckdifferenz $\Delta p_{Leitung}$ über die gesamte Fluidleitung:

$$\Delta p_{leitung} = \Delta p_{laminar} + \Delta p_{träge}$$

$$\Delta p_{träge} = \rho \, L \, \frac{d\Phi}{dt} \qquad mit \quad L = \frac{l}{A} \qquad\qquad (\text{Gl.2})$$

$$\Delta p_{laminar} = \rho \, R \, \Phi$$

Der Strömungswiderstand R und die fluidische Induktivität L rechnen sich beispielsweise für einen runden Schlauch mit dem Radius r und der Leitungslänge l zu:

$$L = \frac{l}{r^2 \pi} \; ; \qquad R = \frac{8\eta l}{\rho \pi r^4} \qquad\qquad (Gl.3)$$

In Fig. 7 ist ein Schema zur Beschreibung der Dynamik einer erfindungsgemäßen Mikrodosiervorrichtung dargestellt, $p_R$ stellt den Druck im Medienreservoir dar, $p_K$ den Kapillardruck und p den Druck in der Druckkammer. $V_m$ entspricht dem von der Membran verdrängten Volumen, während $V_0$ der Änderung des Kammervolumens entspricht, die sich durch Verspannungen des Gehäuses und andere Störeinflüsse ergibt. $\phi_r$ ist der Volumenfluß im Reservoirkanal und $\phi_D$ ist der Fluß im Düsenkanal. In den nachfolgenden Gleichungen entspricht U der Steuerspannung an dem Aktor.

Für die Fluidleitung zwischen der Dosierkammer und dem Reservoir gilt:

$$p_R - p = \rho \, R_R \, \Phi_R + \rho \, L_R \, \frac{d\Phi_R}{dt} \qquad\qquad (Gl.4)$$

Für die Fluidleitung zwischen der Dosierkammer und der Düse gilt:

$$p + p_K - p_{Atmosphäre} = \rho \, R_D \, \Phi_D + \rho \, L_D \, \frac{d\Phi_D}{dt} \qquad\qquad (Gl.5)$$

Für die Dosierkammer gilt:

$$\frac{dV}{dt} = \Phi_R - \Phi_D$$

$$\frac{d}{dt} (V_m + V_o) = \frac{\partial V_m}{\partial p}\Big|_U \frac{dp}{dt} + \frac{\partial V_m}{\partial U}\Big|_p \frac{dU}{dt} + \frac{\partial V_o}{\partial p} \frac{dp}{dt} = \Phi_R - \Phi_D$$

und damit

$$\frac{dp}{dt} = \frac{\Phi_R - \Phi_D - \frac{\partial V_m}{\partial U}\big|_p \frac{dU}{dt}}{\frac{\partial V_m}{\partial p}\big|_U + \frac{\partial V_o}{\partial p}} \qquad\qquad (Gl.6)$$

Zusammenfassend kann festgestellt werden, daß die Dynamik des Dosierelements näherungsweise durch drei Differentialgleichungen für die drei unabhängigen Variablen $\phi_R$, $\phi_D$ und p wie folgt beschrieben wird:

$$\frac{dp}{dt} = \frac{\Phi_R - \Phi_D - \frac{\partial V_m}{\partial U}\big|_p \frac{dU}{dt}}{\frac{\partial V_m}{\partial p}\big|_U + \frac{\partial V_o}{\partial p}}$$

$$\frac{d\Phi_R}{dt} = \frac{p_R - p - \rho \, R_R \, \Phi_R}{\rho \, L_R}$$

$$\frac{d\Phi_D}{dt} = \frac{p + p_K - \rho \, R_D \, \Phi_D}{\rho \, L_D} \qquad\qquad (Gl.7)$$

Als Designvorgaben sind bekannt: $R_R$, $R_D$, $L_R$, $L_D$. Betriebsparameter sind die Spannung U(t) und der Medienreservoirdruck $p_R$. Zu Messen ist der Druck $p_K$ und zu messen oder zu berechnen sind $dV_m/dp$, $dV_0/dp$ und $dV_m/dU$.

Das Differentialgleichungssystem ist für ein vorgegebenes U(t) für die folgenden Randbedingungen zu lösen:

$$p(t=0) = 0;$$

$$\phi_R(t=0) = 0;$$

und

$$\phi_D(t=0) = 0.$$

**Patentansprüche**

1. Volumensensorfreie Mikrodosiervorrichtung mit folgenden Merkmalen:

    einer Druckkammer (24), die zumindest teilweise von einem Verdränger (10) begrenzt ist;

    einer Betätigungseinrichtung (30; 60; 100) zum Betätigen des Verdrängers (10), wobei durch die Betätigung des Verdrängers (10) das Volumen der Druckkammer (24) veränderbar ist;

    einem Medienreservoir, das fluidmäßig mit der Druckkammer (24) verbunden ist;

    einer Auslaßöffnung (26), die fluidmäßig mit der Druckkammer (24) verbunden ist; und

    einer Steuereinrichtung zum Treiben der Mikrodosiervorrichtung, derart,

    daß durch eine Bewegung des Verdrängers (10) aus einer ersten Stellung in eine vorbestimmte zweite Stellung eine kleine Volumenänderung des Druckkammervolumens pro Zeiteinheit bewirkt wird, wobei die zweite Stellung des Verdrängers (10) ein größeres Volumen der Druckkammer (24) definiert als die erste Stellung, zum Ansaugen eines Fluidvolumens in die Druckkammer (24), und

    daß in einer zweiten Phase durch eine Bewegung des Verdrängers (10) aus der zweiten Stellung in die erste Stellung eine große Volumenänderung des Druckkammervolumens pro Zeiteinheit bewirkt wird, um dadurch ein definiertes Fluidvolumen aus der Auslaßöffnung (26) auszustoßen.

2. Volumensensorfreie Mikrodosiervorrichtung gemäß Anspruch 1, bei der das Medienreservoir über eine erste Fluidleitung (20) fluidmäßig mit der Druckkammer (24) verbunden ist, und bei der die Auslaßöffnung (26) über eine zweite Fluidleitung (22) fluidmäßig mit der Druckkammer verbunden ist.

3. Volumensensorfreie Mikrodosiervorrichtung gemäß Anspruch 1 oder 2, bei der die Steuereinrichtung die Betätigungseinrichtung (30; 60; 100) in der ersten Phase mit einem ersten Signal einer geringen Flankensteilheit ansteuert und die Betätigungseinrichtung (30; 60; 100) in der zweiten Phase mit einem zweiten Signal einer hohen Flankensteilheit ansteuert.

4. Volumensensorfreie Mikrodosiervorrichtung gemäß einem der Ansprüche 1 bis 3, bei der die Betätigungseinrichtung (30; 60; 100) und der Verdränger (10) mit einer solchen Steifigkeit ausgebildet sind, daß der Verdränger (10) im wesentlichen zwangsgesteuert ist.

5. Volumensensorfreie Mikrodosiervorrichtung gemäß einem der Ansprüche 2 bis 4, bei der das erste Signal in der ersten Phase derart ist, daß eine Fluidbewegung in der ersten und der zweiten Fluidleitung (20, 22) im wesentlichen trägheitsunabhängig ist, während das zweite Signal in der zweiten Phase derart ist, daß eine Fluidbewegung im wesentlichen durch die Relation der Trägheit des Fluids in der ersten und der zweiten Fluidleitung (20, 22) bestimmt ist.

**6.** Volumensensorfreie Mikrodosiervorrichtung gemäß einem der Ansprüche 1 bis 5, bei der die Druckkammer (24) und der Verdränger (10) als mikromechanisch gefertige Strukturen ausgebildet sind.

**7.** Volumensensorfreie Mikrodosiervorrichtung gemäß Anspruch 6, bei der der Verdränger (10) als eine Membran realisiert ist.

**8.** Volumensensorfreie Mikrodosiervorrichtung gemäß Anspruch 6, bei der zumindest Teile der ersten und der zweiten Fluidleitung (20, 22), die Auslaßöffnung (26) und die Druckkammer (24) durch Strukturen in dem Siliziumwafer und/oder einer Pyrexglasscheibe (18), die mit dem Siliziumwafer verbunden ist, definiert sind.

**9.** Volumensensorfreie Mikrodosiervorrichtung gemäß Anspruch 1 oder 2, bei der der Verdränger (10) eine Membran ist, wobei die Membran durch die Betätigungseinrichtung (60; 100) in die erste Stellung vorspannbar ist, und wobei die Betätigungseinrichtung mit der Membran nicht fest verbunden ist, derart, daß auf eine Betätigung der Betätigungseinrichtung zu Beginn der ersten Phase hin die Bewegung der Membran aus der ersten Stellung in die zweite Stellung lediglich durch die Rückstellkraft der Membran erfolgt.

**10.** Volumensensorfreie Mikrodosiervorrichtung gemäß einem der Ansprüche 1 bis 9, bei der die Betätigungseinrichtung (30; 60; 100) ein Piezostapelaktor ist.

**11.** Volumensensorfreie Mikrodosiervorrichtung gemäß einem der Ansprüche 1 bis 10, bei der die äußere Umrandung der Auslaßöffnung (26) mit einem hydrophoben Material beschichtet ist.

**12.** Volumensensorfreie Mikrodosiervorrichtung gemäß einem der Ansprüche 1 bis 11, bei der die Auslaßöffnung (26) durch ein Array einer Mehrzahl von Öffnungen gebildet ist.

**13.** Volumensensorfreie Mikrodosiervorrichtung gemäß einem der Ansprüche 1 bis 12, die ferner eine Einrichtung zum Erzeugen eines Unterdrucks in dem Medienreservoir aufweist.

**14.** Volumensensorfreie Mikrodosiervorrichtung gemäß einem der Ansprüche 1 bis 13, bei der die Steuereinrichtung die Betätigungsvorrichtung (30; 60; 100) zwischen der ersten und der zweiten Phase in einer dritten Phase für eine vorbestimmte Zeitdauer derart ansteuert, daß der Verdränger (10) in der zweiten Stellung verbleibt.

**15.** Volumensensorfreie Mikrodosiervorrichtung gemäß einem der Ansprüche 1 bis 14, bei der die Steuereinrichtung die Betätigungseinrichtung (30; 60; 100) derart ansteuert, daß der Verdränger (10) bei der Bewegung in die erste Position vor dem endgültigen Erreichen derselben durch die Betätigungseinrichtung (30; 60; 100) zunächst über die erste Position hinausbewegt wird.

**16.** Volumensensorfreie Mikrodosiervorrichtung gemäß Anspruch 9, bei der die Betätigungseinrichtung (60; 100) und die Steuereinrichtung fest in ein Gehäuse (62; 120) eingebaut sind, während die Druckkammer (24), der Verdränger (10) und/oder das Medienreservoir auswechselbar in das Gehäuse installierbar sind.

**17.** Volumensensorfreie Mikrodosiervorrichtung gemäß Anspruch 9, bei der die Rückstellkraft der Membran derart dimensioniert ist, daß der durch die Rückstellkraft verursachte Unterdruck in der Druckkammer kleiner ist als ein in der zweiten Fluidleitung (22) vorliegender Kapillardruck.

**18.** Volumensensorfreie Mikrodosiervorrichtung gemäß einem der Ansprüche 16 oder 17, die ferner eine Feinjustagevorrichtung (102) zur Positionierung der Betätigungseinrichtung (100, 104) bezüglich des Verdrängers aufweist.

**19.** Volumensensorfreie Mikrodosiervorrichtung gemäß einem der Ansprüche 1 bis 18, bei der eine von der Betätigungseinrichtung (100) erzeugte Kraft über ein Kraftübertragungsglied (104) zu dem Verdränger übertragen wird.

**20.** Volumensensorfreie Mikrodosiervorrichtung gemäß Anspruch 19, bei der das Kraftübertragungsglied (104) ein drehbar gelagerter Hebellenker zur Umsetzung einer von der Betätigungseinrichtung (100) erzeugten Kraft in eine im wesentlichen senkrecht zu dieser Kraft auf den Verdränger wirkende Kraft ist.

**21.** Dosiervorrichtungsarray, bestehend aus einer Mehrzahl von Mikrodosiervorrichtungen nach einem der Ansprüche 1 bis 20, die nebeneinander angeordnet und individuell adressierbar sind.

EP 1 049 538 B1

22. Dosiervorrichtungsarray, bestehend aus einer Mehrzahl von Mikrodosiervorrichtungen nach einem der Ansprüche 1 bis 20, die nebeneinander angeordnet und von einer Betätigungseinrichtung angesteuert werden, deren Kraft über ein Kraftübertragungsglied auf mehrere Mikrodosiervorrichtungen gleichzeitig verteilbar ist.

23. Verfahren zum Kalibrieren einer Mikrodosiervorrichtung nach einem der Ansprüche 1 bis 20, bei dem vor dem Dosierbetrieb einmalig ein Verhältnis einer Fluidmenge, die während der zweiten Phase Richtung Medienreservoir verdrängt wird, und einer Fluidmenge, die während der zweiten Phase Richtung Auslaßöffnung verdrängt wird, ermittelt wird, wobei in nachfolgenden Dosiervorgängen der in Richtung Medienreservoir verdrängte Fluidanteil durch eine entsprechend modifizierte Ansteuerung der Betätigungseinrichtung durch die Steuereinrichtung, um eine größere Verdrängung durch den Verdränger zu bewirken, kompensiert wird.

24. Verwendung einer Mikrodosiervorrichtung nach einem der Ansprüche 1 bis 20 als Pipette, wobei die Auslaßöffnung der mit einer Inertflüssigkeit befüllten Druckkammer während der ersten Phase in ein zu pipettierendes Fluid getaucht wird.

**Claims**

1. A volume sensor-free microdosing device comprising:

    a pressure chamber (24) which is at least partly delimited by a displacer (10);

    an actuating device (30; 60; 100) for actuating the displacer (10), the volume of the pressure chamber (24) being adapted to be changed by actuating the displacer (10),

    a media reservoir which is in fluid communication with the pressure chamber (24);

    an outlet opening (26) which is in fluid communication with the pressure chamber (24); and

    a control means for driving the microdosing device in such a way

        that a small change of volume of the pressure chamber volume is effected per unit time by a movement of the displacer (10) from a first position to a predetermined second position, the second position of the displacer (10) defining a larger volume of the pressure chamber (24) than the first position, so as to suck a fluid volume into the pressure chamber (24), and

        that, in a second phase, a large volume change of the pressure chamber volume is effected per unit time by a movement of the displacer (10) from the second position to the first position, so as to eject a defined fluid volume from the outlet opening (26) in this way.

2. A volume sensor-free microdosing device according to claim 1, wherein the media reservoir is in fluid communication with the pressure chamber (24) via a first fluid line (20), and wherein the outlet opening (26) is in fluid communication with the pressure chamber via a second fluid line (22).

3. A volume sensor-free microdosing device according to claim 1 or 2, wherein the control means controls the actuating device (30; 60; 100) in the first phase with a first signal of low edge steepness and in the second phase with a second signal of high edge steepness.

4. A volume sensor-free microdosing device according to one of the claims 1 to 3, wherein the actuating device (30; 60; 100) and the displacer (10) are implemented with a stiffness of such a nature that the displacer (10) is essentially forcibly controlled.

5. A volume sensor-free microdosing device according to one of the claims 2 to 4, wherein the first signal in the first phase is of such a nature that a fluid movement in the first and second fluid lines (20, 22) is essentially inertia independent, whereas the second signal in the second phase is of such a nature that a fluid movement is determined essentially by the relation of the fluid inertias in the first and in the second fluid lines (20, 22).

6. A volume sensor-free microdosing device according to one of the claims 1 to 5, wherein the pressure chamber

15

(24) and the displacer (10) are implemented as micro-mechanically produced structures.

7.  A volume sensor-free microdosing device according to claim 6, wherein the displacer (10) is realized as a membrane.

8.  A volume sensor-free microdosing device according to claim 6, wherein at least parts of the first and second fluid lines (20, 22), the outlet opening (26) and the pressure chamber (24) are defined by structures in the silicon wafer and/or a Pyrex glass plate (18) connected to said silicon wafer.

9.  A volume sensor-free microdosing device according to claim 1 or 2, wherein the displacer (10) is a membrane, said membrane being adapted to be pretensioned by the actuating device (60; 100) such that it occupies a first position, and the actuating device being not fixedly connected to the membrane in such a way that, in response to an actuation of the actuating device at the beginning of the first phase, the movement of the membrane from the first position to the second position will take place only due to the restoring force of the membrane.

10. A volume sensor-free microdosing device according to one of the claims 1 to 9, wherein the actuating device (30; 60; 100) is a piezo-stack actuator.

11. A volume sensor-free microdosing device according to one of the claims 1 to 10, wherein the outer surround of the outlet opening (26) is coated with a hydrophobic material.

12. A volume sensor-free microdosing device according to one of the claims 1 to 11, wherein the outlet opening (26) is formed by an array comprising a plurality of openings.

13. A volume sensor-free microdosing device according to one of the claims 1 to 12, which is additionally provided with a means for generating a negative pressure in the media reservoir.

14. A volume sensor-free microdosing device according to one of the claims 1 to 13, wherein the control means controls the actuating device (30; 60; 100) between the first and second phases in a third phase for a predetermined period of time in such a way that the displacer (10) remains at the second position.

15. A volume sensor-free microdosing device according to one of the claims 1 to 14, wherein the control means controls the actuating device (30; 60; 100) in such a way that the displacer (10), when moving to the fist position, is initially moved beyond said first position by said actuating device (30; 60; 100) prior to finally reaching said first position.

16. A volume sensor-free microdosing device according claim 9, wherein the actuating device (60; 100) and the control means are fixedly installed in a housing (62; 120), whereas the pressure chamber (24), the displacer (10) and/or the media reservoir are adapted to be replaceably installed in the housing.

17. A volume sensor-free microdosing device according to claim 9, wherein the restoring force of the membrane is dimensioned such that the negative pressure caused by said restoring force in the pressure chamber is smaller than a capillary pressure prevailing in the second fluid line (22).

18. A volume sensor-free microdosing device according to one of the claims 16 or 17, which is additionally provided with a fine-adjustment device (102) for positioning the actuating device (100, 104) relative to the displacer.

19. A volume sensor-free microdosing device according to one of the claims 1 to 18, wherein a force produced by the actuating device (100) is transmitted to the displacer via a force-transmitting element (104).

20. A volume sensor-free microdosing device according to claim 19, wherein the force-transmitting element (104) is a rotatably supported lever-type link for converting a force produced by the actuating device (100) into a force acting on the displacer essentially at right angles to said force produced by the actuating device.

21. A dosing device array comprising a plurality of microdosing devices according to one of the claims 1 to 20, said microdosing devices being arranged in juxtaposed relationship and being addressable individually.

22. A dosing device array comprising a plurality of microdosing devices according to one of the claims 1 to 20, said microdosing devices being arranged in juxtaposed relationship and being controlled by an actuating device whose force is adapted to be distributed via a force-transmitting element to a plurality of microdosing devices simultaneously.

23. A method of calibrating a microdosing device according to one of the claims 1 to 20, wherein, prior to the dosing operation, a ratio of a fluid amount displaced in the direction of the media reservoir during the second phase and of a fluid amount displaced in the direction of the outlet opening during said second phase is determined, and wherein during the subsequent dosing processes the fluid amount displaced in the direction of the media reservoir is compensated by a suitably modified control of the actuating device by the control means so as to cause a larger displacement by means of the displacer.

24. The use of a microdosing device according to one of the claims 1 to 20 as a pipette, wherein the outlet opening of the pressure chamber filled with an inert fluid is immersed into a fluid to be pipetted during the first phase.

**Revendications**

1. Dispositif de microdosage sans détecteur de volume, aux caractéristiques suivantes :

   une chambre de refoulement (24) délimitée au moins partiellement par un refouleur (10);
   un dispositif d'actionnement (30 ; 60 ; 100) destiné à actionner le refouleur (10), le volume de la chambre de refoulement (24) pouvant être modifié par l'actionnement du refouleur (10) ;
   un réservoir à fluide en communication de fluide avec la chambre de refoulement (24) ;
   une ouverture de sortie (26) en communication de fluide avec la chambre de refoulement (24) ; et
   un dispositif de commande destiné à commander le dispositif de microdosage de telle sorte

   que par un déplacement du refouleur (10) d'une première position vers une seconde position prédéterminée est obtenue une faible variation du volume de la chambre de refoulement par unité de temps, la seconde position du refouleur (10) définissant un volume de la chambre de refoulement (24) plus grand que la première position, en vue d'aspirer un volume de fluide dans la chambre de refoulement (24), et que, dans une seconde phase, par un déplacement du refouleur (10) de la seconde position vers la première position est obtenue une grande variation du volume de la chambre de refoulement par unité de temps, en vue d'éjecter ainsi un volume de fluide défini de l'ouverture de sortie (26).

2. Dispositif de microdosage sans détecteur de volume suivant la revendication 1, dans lequel le réservoir à fluide communique en fluide, par l'intermédiaire d'un premier conduit de fluide (20), avec la chambre de refoulement (24), et dans lequel l'ouverture de sortie (26) communique en fluide, par l'intermédiaire d'un second conduit de fluide (22), avec la chambre de refoulement.

3. Dispositif de microdosage sans détecteur de volume suivant la revendication 1 ou 2, dans lequel le dispositif de commande active le dispositif d'actionnement (30 ; 60 ; 100), dans la première phase, par un premier signal à faible pente et le dispositif d'actionnement (30 ; 60 ; 100), dans la seconde phase, par un second signal à grande pente.

4. Dispositif de microdosage sans détecteur de volume suivant l'une des revendications 1 à 3, dans lequel le dispositif d'actionnement (30 ; 60 ; 100) et le refouleur (10) sont réalisés avec une raideur telle que le refouleur (10) est substantiellement commandé par force.

5. Dispositif de microdosage sans détecteur de volume suivant l'une des revendications 2 à 4, dans lequel le premier signal dans la première phase est tel qu'un déplacement de fluide dans les premier et second conduits de fluide (20, 22) est substantiellement indépendant de l'inertie, tandis que le second signal dans la seconde phase est substantiellement déterminé par le rapport entre la viscosité du fluide dans le premier et dans le second conduit de fluide (20, 22).

6. Dispositif de microdosage sans détecteur de volume suivant l'une des revendications 1 à 5, dans lequel la chambre de refoulement (24) et le refouleur (10) se présentent sous forme de structures réalisées par des procédés micromécaniques.

7. Dispositif de microdosage sans détecteur de volume suivant la revendication 6, dans lequel le refouleur (10) est réalisé sous forme de membrane.

8.  Dispositif de microdosage sans détecteur de volume suivant la revendication 6, dans lequel au moins des parties des premier et second conduits de fluide (20, 22), l'ouverture de sortie (26) et la chambre de refoulement (24) sont définies par des structures dans la plaquette en silicium et/ou dans un disque en verre Pyrex (18) assemblé avec la plaquette en silicium.

9.  Dispositif de microdosage sans détecteur de volume suivant la revendication 1 ou 2, dans lequel le refouleur (10) est une membrane, la membrane pouvant être prétendue dans la première position par le dispositif d'actionnement (60 ; 100) et le dispositif d'actionnement n'étant pas solidaire de la membrane, de sorte que lors d'un actionnement du dispositif d'actionnement au début de la première phase, le déplacement de la membrane de la première position à la seconde position s'effectue uniquement par la force de rappel de la membrane.

10. Dispositif de microdosage sans détecteur de volume suivant l'une des revendications 1 à 9, dans lequel le dispositif d'actionnement (30; 60; 100) est un actuateur piézo-empilé.

11. Dispositif de microdosage sans détecteur de volume suivant l'une des revendications 1 à 9, dans lequel le bord périphérique extérieur de l'ouverture de sortie (26) est revêtu d'un matériau hydrophobe.

12. Dispositif de microdosage sans détecteur de volume suivant l'une des revendications 1 à 11, dans lequel l'ouverture de sortie (26) est formée par une rangée d'une pluralité d'ouvertures.

13. Dispositif de microdosage sans détecteur de volume suivant l'une des revendications 1 à 12, présentant, par ailleurs, un dispositif destiné à générer une dépression dans le réservoir à fluide.

14. Dispositif de microdosage sans détecteur de volume suivant l'une des revendications 1 à 13, dans lequel le dispositif de commande active le dispositif d'actionnement (30 ; 60 ; 100), entre la première et la seconde phase, dans une troisième phase pendant une durée prédéterminée, de telle sorte que le refouleur (10) reste dans la seconde position.

15. Dispositif de microdosage sans détecteur de volume suivant l'une des revendications 1 à 14, dans lequel le dispositif de commande active le dispositif d'actionnement (30 ; 60 ; 100) de telle sorte que, lors du déplacement vers la première position, le refouleur (10) soit, avant d'atteindre définitivement cette dernière, tout d'abord déplacé par le dispositif d'actionnement (30 ; 60 ; 100) au-delà de la première position.

16. Dispositif de microdosage sans détecteur de volume suivant la revendication 9, dans lequel le dispositif d'actionnement (30 ; 60 ; 100) et le dispositif de commande sont incorporés de manière fixe dans un boîtier (62 ; 120), tandis que la chambre de refoulement (24), le refouleur (10) et/ou le réservoir à fluide peuvent être installés dans le boîtier de manière échangeable.

17. Dispositif de microdosage sans détecteur de volume suivant la revendication 9, dans lequel la force de rappel de la membrane est dimensionnée de telle sorte que la dépression dans la chambre de refoulement créée par la force de rappel est inférieure à la pression capillaire présente dans le second conduit de fluide (22).

18. Dispositif de microdosage sans détecteur de volume suivant l'une des revendications 16 ou 17, présentant, par ailleurs, un dispositif de réglage fin (102) pour le positionnement du dispositif d'actionnement (100, 104) par rapport au refouleur.

19. Dispositif de microdosage sans détecteur de volume suivant l'une des revendications 1 à 18, dans lequel une force générée par le dispositif d'actionnement (100) est transmise au refouleur par l'intermédiaire d'un élément de transmission de force (104).

20. Dispositif de microdosage sans détecteur de volume suivant la revendication 19, dans lequel l'élément de transmission de force (104) est un levier de direction monté de manière rotative destiné à convertir une force générée par le dispositif d'actionnement (100) en une force agissant sur le refouleur de manière sensiblement perpendiculaire à cette force.

21. Rangée de dispositifs de dosage composée d'une pluralité de dispositifs de microdosage suivant l'une des revendications 1 à 20 disposés juxtaposés et pouvant être adressés individuellement.

**22.** Rangée de dispositifs de dosage composée d'une pluralité de dispositifs de microdosage suivant l'une des revendications 1 à 20 disposés juxtaposés et activés par un dispositif d'actionnement dont la force peut être répartie par l'intermédiaire d'un élément de transmission de force simultanément sur plusieurs dispositifs de microdosage.

**23.** Procédé de calibrage d'un dispositif de microdosage suivant l'une des revendications 1 à 20, dans lequel un rapport entre une quantité de fluide qui est, au cours de la seconde phase, refoulée en direction du réservoir à fluide et une quantité de fluide qui est, au cours de la seconde phase, refoulée en direction de l'ouverture de sortie est déterminé une seule fois, avant le fonctionnement en dosage, la part de fluide refoulée en direction du réservoir à fluide étant, lors d'opérations de dosage successives, compensée par une activation modifiée en conséquence du dispositif d'actionnement par le dispositif de commande, afin d'obtenir un refoulement plus important par le refouleur.

**24.** Utilisation d'un dispositif de microdosage suivant l'une des revendications 1 à 20 comme pipette, l'ouverture de sortie d'une chambre de refoulement remplie d'un liquide inerte étant submergée, dans la première phase, dans un fluide à mettre en pipette.

**Fig. 1**

**Fig. 2**

Fig. 3A

Fig. 3B

EP 1 049 538 B1

**Fig. 4**

Fig. 5

Fig. 6

Fig. 7

**Fig. 8**

Fig. 9